# EUROPEAN PATENT APPLICATION

(11) **EP 4 106 465 A1**
(43) Date of publication of application: **21.12.2022**
(21) Application number: 20918834.1
(22) Date of filing: 13.02.2020
(51) Int. Cl.: H04W 72/12

(54) **TERMINAL, WIRELESS COMMUNICATION METHOD, AND BASE STATION**

(71) Applicant: NTT DOCOMO, INC., Chiyoda-ku Tokyo 100-6150 (JP)
(72) Inventor: MATSUMURA, Yuki, Tokyo 100-6150 (JP); KAKISHIMA, Yuichi, Tokyo 100-6150 (JP); NAGATA, Satoshi, Tokyo 100-6150 (JP)
(74) Representative: Hoffmann Eitle
(86) International application number: PCT/JP2020/005555
(87) International publication number: WO 2021/161450

(57) **Abstract**

A terminal according to an aspect of the present disclosure includes: a receiving section that receives a medium access control-control element (MAC CE) indicating a transmission configuration indication (TCI) state; and a control section that uses the TCI state for a spatial relation of a specific uplink signal at timing after acknowledgment (ACK) transmission to the MAC CE when the specific uplink signal satisfies an application condition. According to one aspect of the present disclosure, a UL signal can be appropriately transmitted.

## Description

### Technical Field

The present disclosure relates to a terminal, a radio communication method, and a base station in next-generation mobile communication systems.

### Background Art

In the universal mobile telecommunications system (UMTS) network, the specifications of long term evolution (LTE) have been drafted for the purpose of further increasing high speed data rates, providing lower delays, and so on (see Non Patent Literature 1). In addition, the specifications of LTE-Advanced (third generation partnership project (3GPP) Release (Rel) 10 to 14) have been drafted for the purpose of further increasing capacity and advancement of LTE (3GPP Rel. 8 and 9).

Successor systems to LTE (for example, also referred to as 5th generation mobile communication system (5G), 5G+ (plus), 6th generation mobile communication system (6G), New Radio (NR), or 3GPP Rel. 15 or later) are also being studied.

In the existing LTE systems (for example, 3GPP Rel. 8 to 14), a user terminal (user equipment (UE)) uses at least one of a UL data channel (for example, physical uplink shared channel (PUSCH)) or a UL control channel (for example, physical uplink control channel (PUCCH)) to transmit uplink control information (UCI).

### Citation List

### Non Patent Literature

Non Patent Literature 1:3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April, 2010

### Summary of Invention

### Technical Problem

In a future radio communication system (for example, NR), it has been studied that a user terminal (terminal, a user terminal, user equipment (UE)) controls transmission/reception processing on the basis of information regarding quasi-co-location (QCL).

However, it is not clear how to switch at least one of a spatial relation of an uplink signal and a Path-loss reference signal on the basis of updating of information regarding QCL of a downlink signal. If the UE does not appropriately switch at least one of the spatial relation and the Path-loss reference signal, the UL signal cannot be appropriately transmitted, and system performance such as a decrease in throughput may be deteriorated.

Therefore, an object of the present disclosure is to provide a terminal, a radio communication method, and a base station that appropriately transmit a UL signal.

### Solution to Problem

A terminal according to an aspect of the present disclosure includes: a receiving section that receives a medium access control-control element (MAC CE) indicating a transmission configuration indication (TCI) state; and a control section that uses the TCI state for a spatial relation of a specific uplink signal at timing after acknowledgment (ACK) transmission to the MAC CE when the specific uplink signal satisfies an application condition.

### Advantageous Effects of Invention

According to one aspect of the present disclosure, a UL signal can be appropriately transmitted.

### Brief Description of Drawings

Fig. 1 is a diagram illustrating an example of a measurement delay requirement in intra-frequency measurement.
Figs. 2A and 2B are diagrams illustrating an example of scaling factors considering the number of samples and UE reception beam switching in L1-RSRP measurement.
Figs. 3A and 3B are diagrams illustrating an example of an L1-RSRP measurement period based on an SSB.
Figs. 4A and 4B are diagrams illustrating an example of an L1-RSRP measurement period based on a CSI-RS.
Fig. 5 is a diagram illustrating an example of updating of a spatial relation in Rel. 15.
Fig. 6 is a diagram illustrating an example of updating of a PL-RS in Rel. 16.
Fig. 7 is a diagram illustrating an example of a timeline of switching of at least one of a default spatial relation and a default PL-RS.
Fig. 8 is a diagram illustrating an example of a timeline of switching of a default PL-RS according to a seventh embodiment.
Fig. 9 is a diagram illustrating another example of the timeline of switching the default PL-RS according to the seventh embodiment.
Fig. 10 is a diagram illustrating an example of a timeline of switching of a PL-RS according to an eighth embodiment.
Fig. 11 is a diagram illustrating another example of the timeline of switching of the PL-RS according to the eighth embodiment.
Fig. 12 is a diagram illustrating an example of a schematic configuration of a radio communication system according to one embodiment.
Fig. 13 is a diagram illustrating an example of a configuration of a base station according to one embodiment.
Fig. 14 is a diagram illustrating an example of a configuration of a user terminal according to one embodiment.
Fig. 15 is a diagram illustrating an example of a hardware configuration of a base station and a user terminal according to one embodiment.

### Description of Embodiments

### (TCI, Spatial Relation, and QCL)

In NR, it has been studied to control reception processing (for example, at least one of reception, demapping, demodulation, and decoding) and transmission processing (for example, at least one of transmission, mapping, precoding, modulation, and coding) in UE of at least one of a signal and a channel (expressed as a signal/channel) on the basis of a transmission configuration indication state (TCI state).

The TCI state may represent what is applied to a downlink signal/channel. One corresponding to the TCI state applied to an uplink signal/channel may be expressed as a spatial relation.

The TCI state is information regarding a quasi-co-location (QCL) of the signal/channel, and may also be referred to as a spatial Rx parameter, spatial relation information, or the like. The TCI state may be configured in the UE for each channel or each signal.

The QCL is an indicator indicating a statistical property of a signal/channel. For example, a case where one signal/channel and another signal/channel have a QCL relation may mean that it is possible to assume that at least one of Doppler shift, Doppler spread, an average delay, a delay spread, and a spatial parameter (for example, a spatial Rx parameter) is identical (in QCL with respect to at least one of these) between the plurality of different signals/channels.

Note that the spatial Rx parameter may correspond to a reception beam of the UE (for example, a reception analog beam), and the beam may be specified on the basis of spatial QCL. The QCL (or at least one element of the QCL) in the present disclosure may be replaced with spatial QCL (sQCL).

A plurality of types (QCL types) of QCL may be defined. For example, four QCL types A to D with different parameters (or parameter sets) that can be assumed to be identical may be provided. These parameters (which may be referred to as QCL parameters) are as follows:
- QCL type A (QCL-A): Doppler shift, Doppler spread, average delay, and delay spread;
- QCL type B (QCL-B): Doppler shift and Doppler spread;
- QCL type C (QCL-C): Doppler shift and average delay; and
- QCL type D (QCL-D): spatial Rx parameter.

It may be referred to as a QCL assumption for the UE to assume that a certain control resource set (CORESET), channel, or reference signal has a specific QCL (for example, QCL type D) relation with another CORESET, channel, or reference signal.

The UE may determine at least one of a transmission beam (Tx beam) and a reception beam (Rx beam) of a signal/channel on the basis of a TCI state of the signal/channel or the QCL assumption.

The TCI state may be, for example, information regarding the QCL of a target channel (in other words, a reference signal (RS) for the channel) and another signal (for example, another RS). The TCI state may be configured (indicated) by higher layer signaling, physical layer signaling, or a combination thereof.

In the present disclosure, the higher layer signaling may be any of, for example, radio resource control (RRC) signaling, medium access control (MAC) signaling, broadcast information, and the like, or a combination thereof.

For the MAC signaling, for example, a MAC control element (MAC CE), a MAC protocol data unit (PDU), or the like may be used. The broadcast information may be, for example, a master information block (MIB), a system information block (SIB), remaining minimum system information (RMSI), other system information (OSI), or the like.

The physical layer signaling may be, for example, downlink control information (DCI).

A channel for which a TCI state or spatial relation is configured (specified) may be, for example, at least one of a physical downlink shared channel (PDSCH), a physical downlink control channel (PDCCH), a physical uplink shared channel (PUSCH), and a physical uplink control channel (PUCCH).

Furthermore, an RS having a QCL relation with the channel may be, for example, at least one of a synchronization signal block (SSB), a channel state information reference signal (CSI-RS)), a measurement reference signal (Sounding Reference Signal (SRS)), a tracking CSI-RS (also referred to as a Tracking Reference Signal (TRS)), and a QCL detection reference signal (also referred to as a QRS).

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

The UE may receive, by higher layer signaling, configuration information (for example, PDSCH-Config, tci-StatesToAddModList) including a list of information elements in a TCI state.

The information element ("TCI-state IE" of RRC) of the TCI state configured by the higher layer signaling may include a TCI state ID and one or more pieces of QCL information ("QCL-Info"). The QCL information may include at least one of information regarding the RS having the QCL relation (RS relation information) and information indicating a QCL type (QCL type information). The RS relation information may include information such as an index of an RS (for example, an SSB index and a non-zero power CSI-RS (NZP CSI-RS) resource ID (Identifier)), an index of a cell in which the RS is located, and an index of a bandwidth part (BWP) in which the RS is located.

In Rel. 15 NR, as at least one TCI state of the PDCCH and the PDSCH, both the RS of QCL type A and the RS of QCL type D, or only the RS of QCL type A may be configured for the UE.

In a case where the TRS is configured as the RS of QCL type A, the TRS is different from the demodulation reference signal (DeModulation Reference Signal (DMRS)) of the PDCCH or the PDSCH, and it is assumed that the same TRS is periodically transmitted for a long time. The UE may measure the TRS and calculate an average delay, a delay spread, and the like.

Since the UE in which the TRS is configured as the QCL type A RS in the TCI state of the DMRS of the PDCCH or the PDSCH can assume that the PDCCH or PDSCH DMRS and the TRS QCL type A parameter (average delay, delay spread, etc) are the same, the UE can obtain the type A parameter (average delay, delay spread, etc) of the PDCCH or PDSCH DMRS from the measurement result of the TRS. When performing channel estimation of at least one of the PDCCH and the PDSCH, the UE can perform channel estimation with higher accuracy using the measurement result of the TRS.

The UE configured with the RS of QCL type D may determine the UE reception beam (spatial domain reception filter and UE spatial domain reception filter) using the RS of QCL type D.

An RS of QCL type X in a TCI state may mean an RS in a QCL type X relation with (DMRS of) a certain channel/signal, and this RS may be referred to as a QCL source of QCL type X in the TCI state.

### <TCI state for PDCCH>

Information about the QCL between the PDCCH (or the DMRS antenna port associated with the PDCCH) and a certain RS may be referred to as a TCI state or the like for the PDCCH.

The UE may determine the TCI state for the UE specific PDCCH (CORESET) on the basis of higher layer signaling. For example, for the UE, one or more (K) TCI states may be configured by RRC signaling for each CORESET.

The UE may have one of the plurality of TCI states configured by RRC signaling activated by the MAC CE for each CORESET. The MAC CE may be referred to as a TCI state indication MAC CE for a UE specific PDCCH (TCI State Indication for UE-specific PDCCH MAC CE). The UE may monitor the CORESET on the basis of an active TCI state corresponding to the CORESET.

### <TCI state for PDSCH>

The information about the QCL between the PDSCH (or the DMRS antenna port related to the PDSCH) and a certain DL-RS may be referred to as a TCI state for the PDSCH or the like.

The UE may be notified (configured) of M (M ≥ 1) TCI states for PDSCHs (QCL-Info for M PDSCHs) by higher layer signaling. Note that, the number M of TCI states configured in the UE may be limited by at least one of UE capability or the QCL type.

DCI used for PDSCH scheduling may include a field (which may be referred to as, for example, a TCI field, a TCI state field, or the like) indicating a TCI state for the PDSCH. The DCI may be used for scheduling the PDSCH of one cell, and may be referred to as, for example, DL DCI, DL assignment, DCI format 1_0, DCI format 1_1, or the like.

Whether or not the TCI field is included in the DCI may be controlled by information notified from the base station to the UE. The information may be information (for example, TCI existence information, TCI existence information in DCI, higher layer parameter TCI-PresentInDCI) indicating whether the TCI field is present or absent in the DCI. The information may be configured in the UE by, for example, higher layer signaling.

When more than eight types of TCI states are configured in the UE, the MAC CE may be used to activate (or specify) eight or less types of TCI states. The MAC CE may be referred to as a TCI state activation/deactivation MAC CE for UE specific PDSCH (TCI States Activation/Deactivation for UE-specific PDSCH MAC CE). A value of the TCI field in the DCI may indicate one of the TCI states activated by the MAC CE.

When the UE configures the TCI existence information set to "enabled" to CORESET (CORESET used for PDCCH transmission for scheduling PDSCH) for scheduling PDSCH, the UE may assume that the TCI field exists in DCI format 1_1 of the PDCCH transmitted on the CORESET.

In a case where the TCI existence information is not configured for the CORESET for scheduling the PDSCH, or in a case where the PDSCH is scheduled by the DCI format 1_0, when the time offset between the reception of the DL DCI (the DCI for scheduling the PDSCH) and the reception of the PDSCH corresponding to the DCI is greater than or equal to the threshold, the UE may assume that the TCI state or the QCL assumption for the PDSCH is the same as the TCI state or the QCL assumption applied for the CORESET used for the PDCCH transmission for scheduling the PDSCH in order to determine the QCL of the PDSCH antenna port.

When the TCI existence information is set to "enabled", the TCI field in the DCI in the component carrier (CC) scheduling (PDSCH) indicates the activated TCI state in the scheduled CC or DL BWP, and when the PDSCH is scheduled according to DCI format 1_1, the UE may use the TCI with the DCI and according to the value of the TCI field in the detected PDCCH to determine the QCL of the PDSCH antenna port. When the time offset between the reception of the DL DCI (scheduling the PDSCH) and the PDSCH corresponding to the DCI (PDSCH scheduled by the DCI) is greater than or equal to the threshold, the UE may assume that the DM-RS port of the PDSCH of the serving cell is the RS and QCL in the TCI state with respect to the QCL type parameter given by the indicated TCI state.

If the UE is configured with a single-slot PDSCH, the indicated TCI state may be based on the activated TCI state in the slot with the scheduled PDSCH. If the UE is configured with a multi-slot PDSCH, the indicated TCI state may be based on the activated TCI state in the first slot with the scheduled PDSCH and the UE may expect to be identical across the slots with the scheduled PDSCH. When the UE is configured with a CORESET associated with a search space set for cross-carrier scheduling, the UE may assume that for the CORESET, the TCI existence information is set to "enabled", and when at least one of the TCI states configured for the serving cell scheduled by the search space set includes a QCL type D, the UE may assume that a time offset between the detected PDCCH and a PDSCH corresponding to the PDCCH is greater than or equal to a threshold.

In both a case where the TCI information in the DCI (higher layer parameter TCI-PresentInDCI) is set to "enabled" and a case where the TCI information in the DCI is not configured in the RRC connection mode, when the time offset between reception of DL DCI (DCI for scheduling the PDSCH) and the corresponding PDSCH (PDSCH scheduled by the DCI) is less than the threshold, the UE may assume that the DM-RS port of the PDSCH of the serving cell has a minimum (lowest) CORESET-ID in a newest (latest) slot in which one or more CORESETs in an active BWP of the serving cell are monitored by the UE, and is in QCL with the RS related to a QCL parameter used for QCL indication of the PDCCH of the CORESET associated with a monitored search space. This RS may be referred to as a default TCI state of the PDSCH or a default QCL assumption of the PDSCH.

The time offset between the reception of the DL DCI and the reception of the PDSCH corresponding to the DCI may be referred to as a scheduling offset.

Furthermore, the threshold may be referred to as a time duration for QCL, "timeDurationForQCL", "Threshold", "Threshold for offset between a DCI indicating a TCI state and a PDSCH scheduled by the DCI", "Threshold-Sched-Offset", a schedule offset threshold, a scheduling offset threshold, or the like.

The time duration for QCL may be based on UE capability, for example, may be based on a delay required for decoding and beam switching of the PDCCH. The time duration for QCL may be the minimum time required for the UE to perform PDCCH reception and application of spatial QCL information received in the DCI for PDSCH processing. The time duration for QCL may be represented by the number of symbols for each subcarrier interval or may be represented by time (for example, µs). The information of the time duration for QCL may be reported from the UE to the base station as UE capability information, or may be configured from the base station to the UE using higher layer signaling.

For example, the UE may assume that the DMRS ports of the PDSCH are QCL with the DL-RS based on the TCI state activated for the CORESET corresponding to the lowest CORESET-ID. The latest slot may be, for example, a slot for receiving DCI for scheduling the PDSCH.

Note that the CORESET-ID may be an ID (ID for CORESET identification, controlResourceSetId) configured by the RRC information element "ControlResourceSet".

When no CORESET is configured for a CC, the default TCI state may be an activated TCI state applicable to the PDSCH in the active DL BWP for the CC and having the lowest ID.

After Rel. 16, in a case where the PDSCH and the PDCCH scheduling the PDSCH are in different component carriers (CCs) (cross-carrier scheduling), if the delay from the PDCCH to the PDSCH (PDCCH-to-PDSCH delay) is shorter than the time duration for QCL, or if the TCI state is not in the DCI for the scheduling, the UE may obtain a QCL assumption for the scheduled PDSCH from the active TCI state applicable to the PDSCH in the active BWP for the scheduled cell and having the lowest ID.

### <Spatial Relation for PUCCH>

The UE may configure a parameter (PUCCH configuration information, PUCCH-Config) used for PUCCH transmission by higher layer signaling (for example, Radio Resource Control (RRC) signaling). The PUCCH configuration information may be configured for each partial band (for example, an uplink bandwidth part (Bandwidth Part (BWP))) in the carrier (also referred to as a cell and a component carrier (CC)).

The PUCCH configuration information may include a list of PUCCH resource set information (for example, PUCCH-ResourceSet) and a list of PUCCH spatial relation information (for example, PUCCH-SpatialRelationInfo).

The PUCCH resource set information may include a list (for example, resourceList) of PUCCH resource indices (ID, e.g., PUCCH-ResourceId).

Furthermore, when the UE does not have a dedicated PUCCH resource configuration information (for example, a dedicated PUCCH resource configuration) provided by the PUCCH resource set information in the PUCCH configuration information (before RRC setup), the UE may determine a PUCCH resource set on the basis of a parameter (for example, pucch-ResourceCommon) in the system information (for example, System Information Block Type 1 (SIB1) or Remaining Minimum System Information (RMSI)). The PUCCH resource set may include 16 PUCCH resources.

On the other hand, when the UE has the dedicated PUCCH resource configuration information (UE-Specific Uplink Control Channel Configuration, Dedicated PUCCH Resource Configuration) (after RRC setup), the UE may determine the PUCCH resource set according to the number of UCI information bits.

The UE may determine one PUCCH resource (index) in the PUCCH resource set (for example, a cell-specific PUCCH resource set or a PUCCH resource set determined for individual UE) on the basis of at least one of a value of a field (for example, a PUCCH resource indicator field) in Downlink Control Information (DCI) (for example, the DCI format 1_0 or 1_1 used for PDSCH scheduling), the number of CCEs (N_{CCE}) in a control resource set (control resource set (CORESET)) for reception of a PDCCH that carries the DCI, and an index (n_{CCE,0}) of a head (first) CCE of the reception of the PDCCH.

The PUCCH spatial relation information (for example, "PUCCH-spatialRelationInfo" of the RRC information element) may indicate a plurality of candidate beams (spatial domain filters) for PUCCH transmission. The PUCCH spatial relation information may indicate a spatial relation between a reference signal (RS) and a PUCCH.

The list of PUCCH spatial relation information may include several elements (PUCCH spatial relation information IE (Information Element)). Each piece of PUCCH spatial relation information may include, for example, at least one of an index (ID, e.g., pucch-SpatialRelationInfoId) of PUCCH spatial relation information, an index (ID, e.g., servingCellId) of a serving cell, and information related to a RS (reference RS) that is in a spatial relation with the PUCCH.

For example, the information regarding the RS may be the SSB index, the CSI-RS index (for example, the NZP-CSI-RS resource configuration ID), or the SRS resource ID and the ID of the BWP. The SSB index, the CSI-RS index, and the SRS resource ID may be associated with at least one of a beam, a resource, and a port selected by measurement of a corresponding RS.

If more than one piece of spatial relation information about the PUCCH is configured, the UE may control, on the basis of a PUCCH spatial relation activation/deactivation MAC CE (PUCCH spatial relation Activation/Deactivation MAC CE), that one piece of PUCCH spatial relation information is active for one PUCCH resource at a certain time.

The PUCCH spatial relation activation/deactivation MAC CE of Rel-15 NR is expressed by a total of 3 octets (8 bits × 3 = 24 bits) of octets (Octet, Oct) 1-3.

The MAC CE may include information such as an application target serving cell ID ("Serving Cell ID" field), a BWP ID ("BWP ID" field), and a PUCCH resource ID ("PUCCH Resource ID" field).

Furthermore, the MAC CE includes a field of "Sᵢ" (i = 0-7). When a field of a certain Sᵢ indicates 1, the UE activates the spatial relation information of a spatial relation information ID #i. When a field of a certain Sᵢ indicates 0, the UE deactivates the spatial relation information of the spatial relation information ID #i.

The UE may activate PUCCH relation information specified by a MAC CE 3 ms after transmitting an acknowledgment (ACK) for the MAC CE activating PUCCH spatial relation information.

### <Spatial Relation for SRS and PUSCH>

The UE may receive information (SRS configuration information, for example, a parameter in "SRS-Config" of the RRC control element) used for transmission of a measurement reference signal (for example, a sounding reference signal (SRS)).

Specifically, the UE may receive at least one of information related to one or a plurality of SRS resource sets (SRS resource set information, for example, "SRS-ResourceSet" of the RRC control element) and information related to one or a plurality of SRS resources (SRS resource information, for example, "SRS-Resource" of the RRC control element).

One SRS resource set may be associated with several SRS resources (several SRS resources may be grouped). Each SRS resource may be specified by an SRS resource identifier (SRS Resource Indicator (SRI)) or an SRS resource ID (Identifier).

The SRS resource set information may include an SRS resource set ID (SRS-ResourceSetId), a list of SRS resource IDs (SRS-ResourceId) used in the resource set, an SRS resource type, and information of usage of the SRS.

Here, the SRS resource type may indicate any of periodic SRS (P-SRS), semi-persistent SRS (SP-SRS), and aperiodic SRS (A-SRS, AP-SRS). The UE may periodically (or periodically after activation) transmit the P-SRS and the SP-SRS, and transmit the A-SRS on the basis of the SRS request of the DCI.

In addition, the application ("usage" of the RRC parameter and "SRS-SetUse" of the L1 (Layer-1) parameter) may be, for example, beam management (beamManagement), codebook-based transmission (codebook: CB), noncodebook-based transmission (nonCodebook: NCB), antenna switching (antennaSwitching), or the like. The SRS for codebook-based or noncodebook-based transmission applications may be used to determine precoders for codebook-based or noncodebook-based PUSCH transmissions based on SRI.

For example, the UE may determine a precoder for PUSCH transmission on the basis of an SRI, a transmitted rank indicator (TRI), and a transmitted precoding matrix indicator (TPMI), in a case of the codebook-based transmission. The UE may determine the precoder for the PUSCH transmission on the basis of the SRI, in a case of the non-codebook-based transmission.

The SRS resource information may include an SRS resource ID (SRS-ResourceId), the number of SRS ports, an SRS port number, a transmission Comb, an SRS resource mapping (for example, time and/or frequency resource location, resource offset, cycle of resource, number of repetitions, number of SRS symbols, SRS bandwidth, etc), hopping-related information, an SRS resource type, a sequence ID, spatial relation information of an SRS, and the like.

The spatial relation information (for example, "spatialRelationInfo" of the RRC information element) of the SRS may indicate spatial relation information between a certain reference signal and the SRS. The reference signal may be at least one of a synchronization signal/physical broadcast channel (SS/PBCH) block, a channel state information reference signal (CSI-RS), and SRS (for example, another SRS). The SS/PBCH block may be referred to as a synchronization signal block (SSB).

The spatial relation information of the SRS may include at least one of an SSB index, a CSI-RS resource ID, and an SRS resource ID as an index of the reference signal.

Note that, in the present disclosure, the SSB index, the SSB resource ID, and the SSB resource indicator (SSBRI) may be replaced with each other. Further, the CSI-RS index, the CSI-RS resource ID, and the CSI-RS resource indicator (CRI) may be replaced with each other. Further, the SRS index, the SRS resource ID, and the SRI may be replaced with each other.

The spatial relation information of the SRS may include a serving cell index, a BWP index (BWP ID), and the like corresponding to the reference signal.

In the NR, the transmission of the uplink signal may be controlled on the basis of the presence or absence of beam correspondence (BC). The BC may be, for example, a capability of a certain node (for example, a base station or UE) to determine a beam (transmission beam, Tx beam) used for signal transmission on the basis of a beam (reception beam, Rx beam) used for signal reception.

Note that the BC may be referred to as transmission/reception beam correspondence (Tx/Rx beam correspondence), beam reciprocity, beam calibration, calibrated/non-calibrated, reciprocity calibrated/non-calibrated, correspondence degree, matching degree, or the like.

For example, when there is no BC, the UE may transmit the uplink signal (for example, PUSCH, PUCCH, SRS, and the like) using the same beam (spatial domain transmission filter) as the SRS (or the SRS resource) indicated from the base station on the basis of the measurement results of one or more SRSs (or the SRS resource).

On the other hand, in the case of the presence of BC, the UE may transmit the uplink signal (for example, PUSCH, PUCCH, SRS, and the like) using a beam (spatial domain transmission filter) that is the same as or corresponding to a beam (spatial domain reception filter) used to receive the SSB or CSI-RS (or CSI-RS resource).

When the spatial relation information related to the SSB or the CSI-RS and the SRS is configured for a certain SRS resource (for example, in the case of the presence of BC,), the UE may transmit the SRS resource using the same spatial domain filter (spatial domain transmission filter) as the spatial domain filter (spatial domain reception filter) for receiving the SSB or the CSI-RS. In this case, the UE may assume that the UE reception beam of the SSB or CSI-RS and the UE Tx beam of the SRS are the same.

For a certain SRS (target SRS) resource, when the spatial relation information about another SRS (reference SRS) and the SRS (target SRS) is configured (for example, in the case of no BC,), the UE may transmit the target SRS resource using the same spatial domain filter (spatial domain transmission filter) as the spatial domain filter (spatial domain transmission filter) for transmission of the reference SRS. That is, in this case, the UE may assume that the UE Tx beam of the reference SRS and the UE Tx beam of the target SRS are the same.

The UE may determine the spatial relation of the PUSCH scheduled by the DCI on the basis of a value of a field (for example, the SRS resource identifier (SRI) field) in the DCI (for example, DCI format 0_1). Specifically, the UE may use the spatial relation information (for example, "spatialRelationInfo" of the RRC information element) of the SRS resource determined on the basis of the value (for example, SRI) of the field for the PUSCH transmission.

When using codebook based transmission for the PUSCH, the UE may be configured with two SRS resources by the RRC and indicated with one of the two SRS resources by the DCI (1-bit field). When using non-codebook based transmission for the PUSCH, the UE may be configured with four SRS resources by the RRC and indicated with one of the four SRS resources by the DCI (2-bit field). In order to use a spatial relation other than the two or four spatial relations configured by the RRC, RRC reconfiguration is required.

Note that the DL-RS can be configured for the spatial relation of the SRS resource used for the PUSCH. For example, for the SP-SRS, the UE may be configured with a spatial relation of a plurality of (for example, up to 16) SRS resources by the RRC, and indicated with one of the plurality of SRS resources by the MAC CE.

### (Path-loss RS)

The Path-loss PL_{b,f,c} (q_{d}) [dB] in transmission power control of each of a PUSCH, a PUCCH, and an SRS is calculated by the UE by using the index q_{d} of a reference signal (an RS, or a Path-loss reference RS (PathlossReferenceRS)) for a downlink BWP associated with the active UL BWP b of the carrier f of the serving cell c. In the present disclosure, the Path-loss reference RS, the Path-loss (PL)-RS, the index q_{d}, the RS used for Path-loss calculation, and an RS resource used for Path-loss calculation may be replaced with each other. In the present disclosure, calculation, estimation, measurement, and tracking may be replaced with each other.

Studies are being made on whether to change the existing mechanism of higher layer filtered RSRP for Path-loss measurement in a case where the Path-loss RS is updated by an MAC CE.

In a case where the Path-loss RS is updated by the MAC CE, Path-loss measurement based on L1-RSRP may be applied. At available timing after the MAC CE for updating the Path-loss RS, higher layer filtered RSRP may be used for Path-loss measurement; before the higher layer filtered RSRP is applied, L1-RSRP may be used for Path-loss measurement. At available timing after the MAC CE for updating the Path-loss RS, higher layer filtered RSRP may be used for Path-loss measurement; before the above-mentioned timing, the higher layer filtered RSRP of the previous Path-loss RS may be used. Similar to the operation of Rel. 15, higher layer filtered RSRP may be used for Path-loss measurement, and the UE may track all Path-loss RS candidates configured by the RRC. The maximum number of Path-loss RSs that can be configured by the RRC may depend on the UE capability. When the maximum number of Path-loss RSs that can be configured by the RRC is X, X or less Path-loss RS candidates may be configured by the RRC, and a Path-loss RS may be selected by the MAC CE from among the configured Path-loss RS candidates. The maximum number of Path-loss RSs that can be configured by the RRC may be 4, 8, 16, 64, or the like.

In the present disclosure, higher layer filtered RSRP, filtered RSRP, and layer 3 filtered RSRP may be replaced with each other.

### (Measurement Delay Requirement)

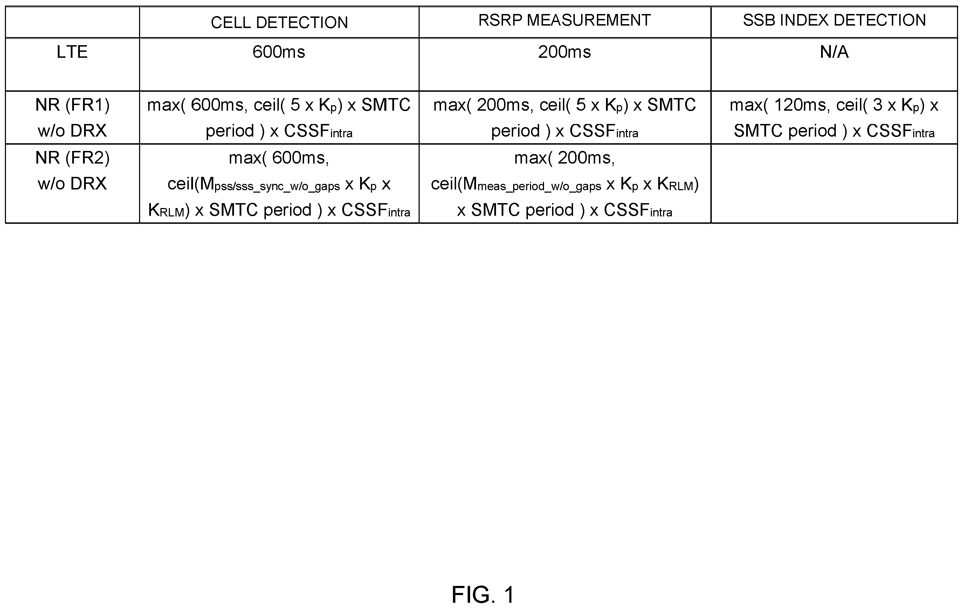

For radio resource management (RRM) measurement for layer 3 (L3) mobility, a measurement delay requirement for intra-frequency measurement is defined. As illustrated in Fig. 1, a measurement delay requirement is defined for each of cell detection, RSRP measurement, and SSB index detection.

Here, M_{pss/sss_sync_w/o_gaps} is 40 for the UE supporting the FR2 power class 1, 24 for the UE supporting the FR2 power class 2, 24 for the UE supporting the FR2 power class 3, and 24 for the UE supporting the FR2 power class 4. M_{meas_period_w/o_gaps} is 40 for the UE supporting the power class 1, 24 for the UE supporting the FR2 power class 2, 24 for the UE supporting the power class 3, and 24 for the UE supporting the power class 4. When the intra-frequency SSB measurement timing configuration (SMTC) does not completely overlap with the measurement gap (MG), or when the intra-frequency SMTC does completely overlap with the MG, Kₚ = 1 is obtained. When the intra-frequency SMTC partially overlaps with the MG, by using a measurement gap repetition period (MGRP), Kₚ = 1/(1 - (SMTC period/MGRP)) and SMTC period < MGRP are obtained. K_{RLM} (K_{layer1_measurement}) is 1 or 1.5 according to a relation between all reference signals configured for radio link monitoring (RLM), beam failure detection (BFD), candidate beam detection (CBD), or beam reporting L1-RSRP outside the MG, and intra-frequency SMTC occasion. CSSFᵢₙₜᵣₐ is a carrier-specific scaling factor.

When there is DRX and the DRX cycle is 320 ms or less, the ceil function is multiplied by 1.5 in consideration of the DRX ON duration and the SMTC window misalignment.

In LTE, since measurement is always possible by a CRS, a measurement delay requirement is 600 ms for cell detection and synchronization + 200 ms for RSRP measurement = fixed value 800 ms. In NR, 600 ms for cell detection in LTE and 200 ms for RSRP measurement in LTE are defined as lower limit values in order to avoid unnecessarily frequent measurement from the viewpoint of UE power consumption proposal. In NR, since the SMTC cycle can be set, the measurement delay requirement according to the SMTC cycle is applied.

### (L1-RSRP Measurement/Report)

The UE measures a value of layer 1 (L1) -RSRP for each RS (each base station Tx beam) configured by the RRC.

For each report of L1-RSRP, a measurement period indicating that L1-RSRP measurement needs to be completed within how many samples immediately before is defined. When the number of samples used for RSRP measurement for one L1-RSRP report is M, a scaling factor considering overlapping with an SMTC or a measurement gap (MG) is P, a scaling factor considering switching of a UE reception beam is N, and a transmission cycle of an SSB or a CSI-RS is an RS transmission cycle, a measurement period T in FR1 is represented as an M × P × RS transmission cycle, and a measurement period T in FR2 is represented as an M × N × P × RS transmission cycle.

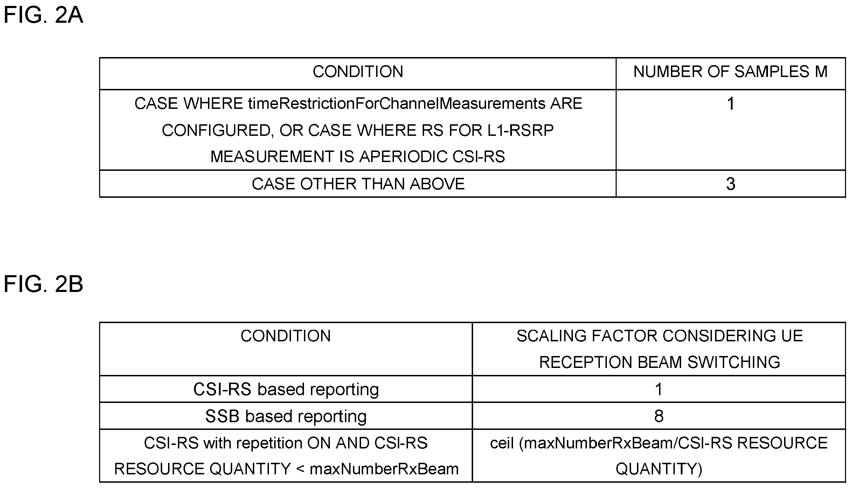

Here, as illustrated in Fig. 2A, when time domain measurement restrictions (timeRestrictionForChannelMeasurements) for channel (signal) measurement are configured, or when an RS for L1-RSRP measurement is an aperiodic CSI-RS, M = 1 is obtained; otherwise, M = 3 is obtained. As illustrated in Fig 2B, when the L1-RSRP report is based on a CSI-RS, N = 1 is obtained, when the L1-RSRP report is based on an SSB, N = 8 is obtained; and when the L1-RSRP report is based on a CSI-RS with repetition and a CSI-RS resource quantity is smaller than the maximum number of received beams (maxNumberRxBeam), N = ceil (maxNumberRxBeam/CSI-RS resource quantity) is obtained.

Measurement accuracy of L1-RSRP based on one-sample measurement is defined. Whether or not to average RSRP in L1 may depend on UE implementation. When time domain measurement restrictions for channel measurement are configured, the UE reports one sample RSRP as an L1-RSRP measurement result without using averaging.

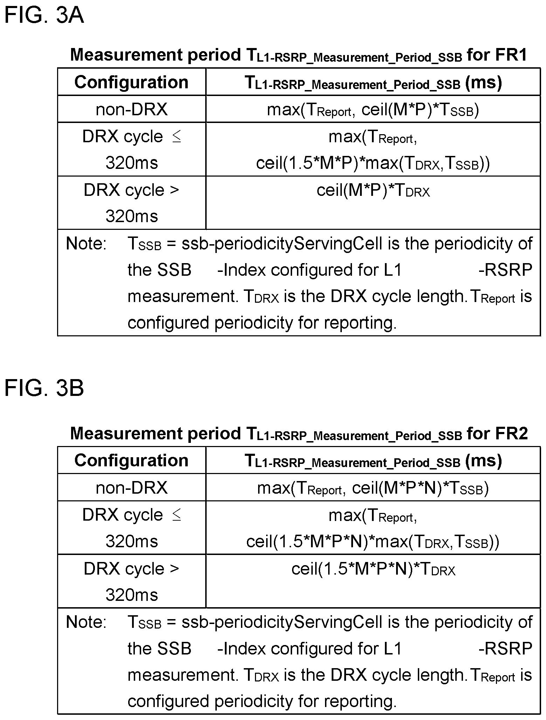

Fig. 3A illustrates the L1-RSRP measurement period T_{L1-RSRP_Measurement_Period_SSB} based on the SSB for FR1. Fig. 3B illustrates the L1-RSRP measurement period T_{L1-RSRP_Measurement_period_SSB} based on the SSB for FR2. Here, T_{SSB} = ssb-periodicityServingCell is the cycle of the SSB index configured for L1-RSRP measurement. T_{DRX} is a DRX cycle length. T_{Report} is a cycle configured for reporting.

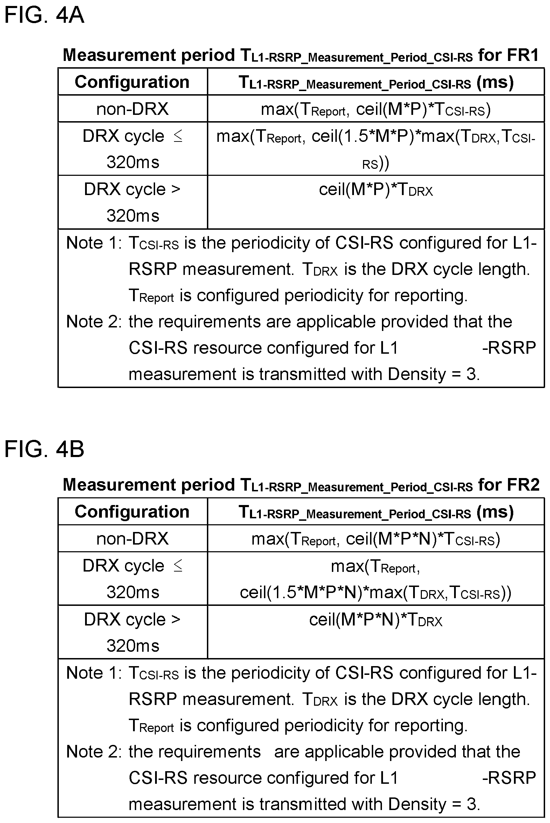

Fig. 4A illustrates the L1-RSRP measurement period T_{L1-RSRP_Measurement_Period_CSI-RS} based on the CSI-RS for FR1. Fig. 4B illustrates the L1-RSRP measurement period T_{L1-RSRP_Measurement_Period_CSI-RS} based on the CSI-RS for FR2. The T_{CSI-RS} is a cycle of the CSI-RS configured for the L1-RSRP measurement. This requirement is applicable to a case in which the CSI-RS configured for the L1-RSRP measurement is transmitted with Density = 3.

### (Default Spatial Relation and Default PL-RS)

In Rel. 15, individual MAC CEs of an MAC CE for activation/deactivation of a PUCCH spatial relation and an MAC CE for activation/deactivation of an SRS spatial relation are needed. The PUSCH spatial relation conforms to the SRS spatial relation.

In Rel. 16, at least one of an MAC CE for activation/deactivation of a PUCCH spatial relation and an MAC CE for activation/deactivation of an SRS spatial relation may not be used.

In a case where neither a spatial relation nor a PL-RS for a PUCCH is configured in FR2, default assumptions of the spatial relation and the PL-RS (a default spatial relation and a default PL-RS) are applied to the PUCCH. In a case where neither a spatial relation nor a PL-RS for an SRS is configured in FR2, default assumptions of the spatial relation and the PL-RS (a default spatial relation and a default PL-RS) are applied to the PUSCH scheduled by DCI format 0_1 and the SRS.

In a case where CORESETs are configured in an active DL BWP on the CC, the default spatial relation and the default PL-RS may be the TCI state or the QCL assumption of the CORESET having the lowest CORESET ID in the active DL BWP. In a case where CORESETs are not configured in an active DL BWP on the CC, the default spatial relation and the default PL-RS may be the active TCI state having the lowest ID of PDSCHs in the active DL BWP.

In Rel. 15, the spatial relation of a PUSCH scheduled by DCI format 0_0 conforms to the spatial relation of the PUCCH resource having the lowest PUCCH resource ID among active spatial relations of PUCCHs on the same CC. Even in a case where no PUCCHs are transmitted on SCells, the network needs to update the PUCCH spatial relations on all SCells.

In Rel. 16, a PUCCH configuration for a PUSCH scheduled by DCI format 0_0 is not needed. A default spatial relation and a default PL-RS are applied to a PUSCH scheduled by DCI format 0_0.

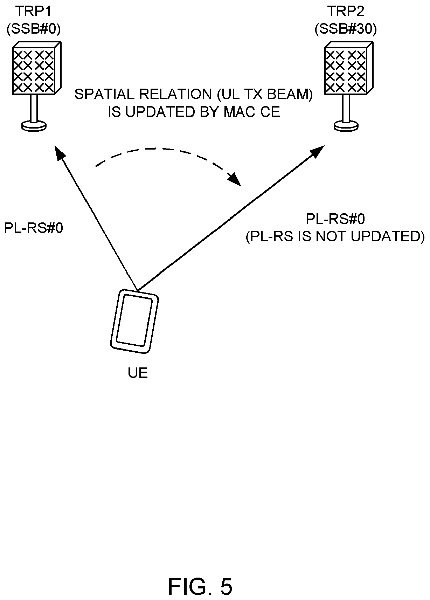

For accurate Path-loss measurement for transmission power control, in the UE of Rel. 15, up to 4 PL-RSs are configured by RRC signaling. As illustrated in Fig. 5, even in a case where the UL Tx beam (spatial relation) is updated by an MAC CE, the PL-RS cannot be updated by an MAC CE.

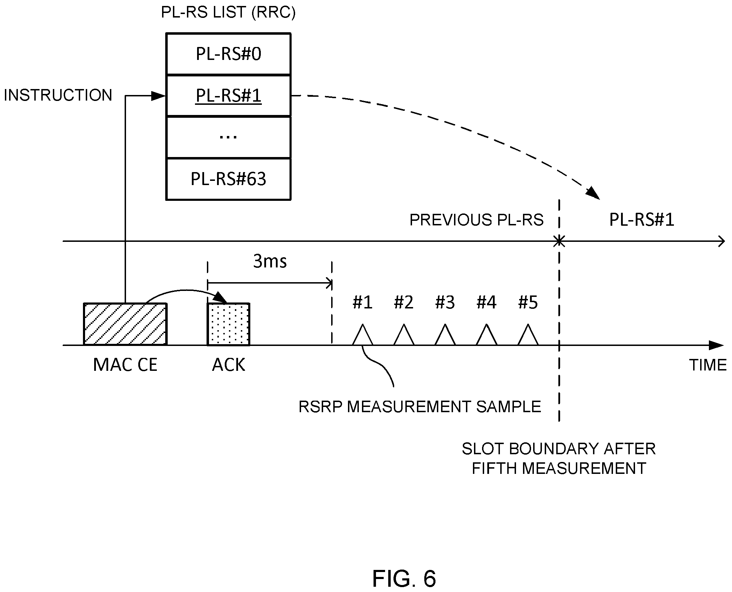

As illustrated in Fig. 6, in the UE of Rel. 16, up to 64 PL-RSs are configured by RRC signaling, and one PL-RS is indicated (activated) by an MAC CE. The UE is required to track up to 4 active PL-RSs for all UL channels (an SRS, a PUCCH, and a PUSCH). Tracking a PL-RS may be calculating a Path-loss based on measurement of the PL-RS and retaining (storing) the Path-loss.

For the Path-loss calculation, the higher layer filtered RSRP (average of a plurality of RSRP measurements) is used. As illustrated in Fig. 6, when the PL-RS is updated by the MAC CE (when a PL-RS #1 different from a PL-RS (previous PL-RS) used for Path-loss calculation in the PL-RS list configured by the RRC is indicated by the MAC CE), the first RSRP measurement instance 3 ms after the transmission of the ACK for the MAC CE may be set as the first RSRP measurement sample, and PL-RS #1 may be applied to a slot boundary after the fifth RSRP measurement sample (may be used for Path-loss calculation).

In the present disclosure, the RSRP measurement, the RSRP measurement sample, the RSRP measurement resource, the RSRP measurement timing, the RSRP measurement instance, the PL-RS measurement sample, the PL-RS measurement resource, the PL-RS measurement, the PL-RS measurement timing, and the PL-RS measurement instance may be replaced with each other.

When a TCI state for a PDCCH or a PDSCH is updated by the MAC CE, the PL-RS is also updated to the TCI state. When the UE applies the default spatial relation and the default PL-RS, it is not clear how to apply the updated PL-RS. Since measurement for the higher layer filtered RSRP requires a time, the updated PL-RS cannot be applied immediately after updating the TCI state.

### (DL Reception Beam Management)

The UE may be configured with one or more TCI states on the serving cell. The UE completes switching of an active TCI state within a delay time. When the active TCI state is updated by the MAC CE, a point of time from which the updated TCI state (target TCI state) is applied (a length of the delay time) depends on whether or not the target TCI state is known (measured). When the target TCI is unknown (not measured), the UE may apply the target TCI state after a time at which the target TCI becomes known.

When the following known conditions for TCI state (conditions for TCI state to be considered known) are satisfied, the target TCI state is known.
- During a period (TCI switching period) from the last transmission of the RS resource used for the L1-RSRP measurement report for the target TCI state to the completion of the active TCI state switching, the RS resource for the L1-RSRP measurement is an RS in the target TCI state or an RS having a QCL relation with the target TCI state.
- During the TCI switching period, a TCI state switching command is received within 1280 ms from the last transmission of that RS resource for beam reporting or measurement.
- During the TCI switching period, before the TCI state switching command, the UE transmits at least one L1-RSRP report for the target TCI state.
- During the TCI switching period, the target TCI state is in a detectable state.
- During the TCI switching period, the SSB associated with the target TCI state is in a detectable state.
- During the TCI switching period, a signal-to-noise ratio (SNR) of the target TCI state is -3 dB or more.

When the known conditions for TCI state are not satisfied, the target TCI state is unknown.

When the target TCI state is known, the UE can receive the PDCCH with the target TCI state of the serving cell where TCI state switching occurs before slot n + T_{HARQ} + (3 ms + TOₖ * (T_{first-SSB} + T_{SSB-proc}))/NR slot length, in response to reception of the PDSCH carrying the MAC CE activation command in the slot n. The UE can receive the PDCCH with the old (pre-updating) TCI state up to slot n + T_{HARQ} + (3 ms + TOₖ * (T_{first-SSB}))/NR slot length.

Here, T_{HARQ} is a time between DL data transmission and acknowledgement. T_{first-SSB} is a time required until the MAC CE command is decoded by the UE and then the first SSC transmission is performed. T_{SSB-proc} is 2 ms. TOₖ is 1 when the target TCI state is not in the active TCI state list for the PDSCH and 0 otherwise.

When the target TCI state is unknown, in response to reception of the PDSCH carrying the MAC CE activation command in the slot n, the UE can receive the PDCCH with the target TCI state of the serving cell where TCI state switching occurs before slot n + T_{HARQ} + (3 ms + T_{L1-RSRP} + TOᵤₖ * (T_{first-SSB} + T_{SSB-proc}))/NR slot length. The UE can receive the PDCCH with the old (pre-updating) TCI state up to slot n + T_{HARQ} + (3 ms + T_{L1-RSRP} + TOᵤₖ * (T_{first-SSB}))/NR slot length.

Here, T_{L1-RSRP} is a time for L1-RSRP measurement for improving the reception beam. T_{L1-RSRP} for the SSB is T_{L1-RSRP_Measurement_Period_SSB} in a case of M = 1 and T_{Report} = 0. T_{L1-RSRP} for the CSI-RS is T_{L1-RSRP_Measurement_Period_CSI-RS} in a case of M = 1 and T_{Report} = 0 for a periodic CSI-RS and an aperiodic CSI-RS when a resource quantity in the resource set is at least equal to MaxNumberRxBeam. TOᵤₖ is 1 for CSI-RS-based L1-RSRP measurements and 0 for SSB-based L1-RSRP measurements when TCI state switching includes QCL type D. In addition, TOᵤₖ is 1 when the TCI state switching includes other QCL types. When the TCI state switching includes only QCL type A, QCL type B, or QCL type C, for the SSB in FR2, T_{L1-RSRP_Measurement_period_SSB} = 0 is obtained, and for the CSI-RS in FR2, T_{L1-RSRP_Measurement_period_CSI-RS} = 0 is obtained. When the TCI state switching includes QCL type D, T_{first-SSB} is a time required until L1-RSRP measurement is performed and then the first SSB measurement is performed. For other ALC types, T_{first-SSB} is a time required until the MAC CE command is decoded by the UE and then the first SSC transmission is performed. For the target TCI state, the SSB is QCL type A or QCL type C.

When the TCI state for the PDCCH or PDSCH is updated by the MAC CE, the UE applying the default spatial relation preferably adjusts the default spatial relation to the updated TCI state. However, a timeline for switching the default spatial relation is not clear. In addition, when the TCI state updated by the MAC CE is unknown, it is not clear how to switch the default spatial relation.

Therefore, the present inventors have conceived a method for appropriately switching the default spatial relation according to the update of the TCI state based on the MAC CE.

Hereinafter, embodiments according to the present disclosure will be described in detail with reference to the drawings. The radio communication methods according to the embodiments may be applied alone or in combination.

In the present disclosure, "A/B" and "at least one of A and B" may be interchangeable. In the present disclosure, a cell, a CC, a carrier, a BWP, and a band may be interchangeable. In the present disclosure, an index, an ID, an indicator, and a resource ID may be interchangeable. In the present disclosure, an RRC parameter, a higher layer parameter, an RRC information element (IE), and an RRC message may be interchangeable.

In the present disclosure, the TCI state, the QCL assumption, the QCL parameter, the spatial domain reception filter, the UE spatial domain reception filter, the UE reception beam, the DL reception beam, the DL precoding, the DL precoder, the DL-RS, the RS of QCL type D of the TCI state or the QCL assumption, and the RS of QCL type A of the TCI state or the QCL assumption may be replaced with each other. In the present disclosure, the RS of QCL type D, the DL-RS associated with QCL type D, the DL-RS with QCL type D, a source of the DL-RS, the SSB, and the CSI-RS may be replaced with each other.

In the present disclosure, the spatial relation, the spatial relation information, the spatial relation assumption, the QCL parameter, the spatial domain transmission filter, the UE spatial domain transmission filter, the UE Tx beam, the UL Tx beam, the UL precoding, the UL precoder, the spatial relation RS, the DL-RS, the QCL assumption, the SRI, the spatial relation based on the SRI, and the UL TCI may be replaced with each other.

In the present disclosure, the TRS, the tracking CSI-RS, the CSI-RS having the TRS information (higher layer parameter trs-Info), and the NZP-CSI-RS resource in the NZP-CSI-RS resource set having the TRS information may be replaced with each other.

In the present disclosure, DCI format 0_0, DCI including no SRI, DCI including no indication of a spatial relation, and DCI including no CIF may be replaced with each other. In the present disclosure, DCI format 0_1, DCI including an SRI, DCI including an indication of a spatial relation, and DCI including a CIF may be replaced with each other.

In the present disclosure, the individual PUCCH and the PUCCH based on the individual PUCCH setting (PUCCH-Config) may be replaced with each other. In the present disclosure, the individual SRS and the SRS based on the individual SRS setting (SRS-Config) may be replaced with each other.

### (Radio Communication Method)

In the present disclosure, the specific UL signal and the specific type of UL signal may be replaced with each other. The specific UL signal may be at least one of a PUCCH (individual PUCCH), an SRS (individual SRS), a PUSCH scheduled by the DCI format 0_1, and a PUSCH scheduled by the DCI format 0_0.

In the present disclosure, the specific DL signal, the specific type of DL signal, the specific DL channel, and the specific type of DL channel may be replaced with each other. The specific DL signal may be at least one of a PDCCH, a PDSCH, and a CORESET.

In the present disclosure, a TCI state updated by the MAC CE, a TCI state activated by the MAC CE, a TCI state indicated by the MAC CE, a target TCI state, a TCI state of a PL-RS activated by the MAC CE, a default spatial relation of a specific UL signal, and a TCI state referred to by at least one of the default PL-RS may be replaced with each other. In the present disclosure, 3 ms may be replaced with a specific time. The specific time may not be 3 ms. The specific time may be defined in a specification, may be set by an RRC parameter, or may be a value reported by UE capability information.

When the specific UL signal satisfies the application condition and the TCI state of the specific DL signal is updated by the MAC CE, at least one of the default spatial relation and the default PL-RS of the specific UL signal may be switched to the target TCI state according to the specific timeline.

The application condition may require at least one of that the frequency of the specific UL signal is within the specific frequency range (FR), that the specific higher layer parameter corresponding to the specific UL signal is configured, that the specific UL signal condition corresponding to the specific UL signal is satisfied, and that the target TCI state is known.

The specific frequency range may be FR2 or may be other than FR1.

The specific higher layer parameter may correspond to the specific UL signal. When the specific UL signal is a PUSCH scheduled by the DCI format 0_0, a corresponding specific higher layer parameter may be default beam Path-loss enabling information (enableDefaultBeamPlForPUSCH0_0). When the specific UL signal is the individual PUCCH, a corresponding specific higher layer parameter may be default beam Path-loss enabling information (enableDefaultBeamPlForPUCCH). When the specific UL signal is at least one of the individual SRS and the PUSCH scheduled by the DCI format 0_1, a corresponding specific higher layer parameter may be default beam Path-loss enabling information (enableDefaultBeamPlForSRS).

The combination of the specific UL signal and the specific UL signal condition for it may be at least one of the following specific UL signals 1 to 4.

### [Specific UL Signal 1]

The specific UL signal is the individual PUCCH. The specific UL signal condition is that both the spatial relation and the PL-RS are not configured for the specific UL signal.

### [Specific UL Signal 2]

The specific UL signal is the individual SRS. The specific UL signal condition is that both the spatial relation and the PL-RS are not configured for the specific UL signal.

### [Specific UL Signal 3]

The specific UL signal is a PUSCH scheduled by the DCI format 0_0. The specific UL signal condition is that, for the specific UL signal, there is no PUCCH resource configuration on the active UL BWP, or there is no active space relation on the PUCCH resource on the active UL BWP.

### [Specific UL Signal 4]

The specific UL signal is a PUSCH scheduled by the DCI format 0_1. The specific UL signal condition is that the corresponding SRS resource (the SRS resource indicated by the SRI) does not include the spatial relation and the PL-RS with respect to the specific UL signal.

When the CORESET is set to the active DL BWP on the CC of the specific UL signal, the specific DL signal may be a PDCCH. When the CORESET is not set to the active DL BWP on the CC of the specific UL signal, the specific DL signal may be a PDSCH.

### <First Embodiment>

When the application condition is satisfied and the TCI state of the specific DL signal is updated by the MAC CE, at least one of the default spatial relation and the default PL-RS for the specific UL signal may be switched according to the specific timeline. The specific timeline may be any one of the following timelines 1 and 2.

### [Timeline 1]

The default spatial relation switching timeline may be the same as the default PL-RS switching timeline. In other words, the timing at which the previous spatial relation is switched to the target TCI state may be the same as the timing at which the previous PL-RS is switched to the target TCI state.

The UE may calculate the switching time of the default PL-RS and the switching time of the default spatial relation, and a longer one of the two calculated switching times may be used as the switching time of both the default PL-RS and the default spatial relation. The switching time may be a time from reception of the MAC CE updating the TCI state to switching of at least one of the default spatial relation and the default PL-RS, may be a time from transmission of the ACK for the MAC CE to switching of at least one of the default spatial relation and the default PL-RS, or may be a time from 3 ms after transmission of the ACK for the MAC CE to switching of at least one of the default spatial relation and the default PL-RS.

According to the timeline 1, the default spatial relation and the default PL-RS can always be identical, and the UE can properly calculate transmission power.

### [Timeline 2]

The default spatial relation switching timeline may be different from the default PL-RS switching timeline. The switching time of the default spatial relation may be shorter than the switching time of the default PL-RS. For example, the UE may switch the default spatial relation to the target TCI state 3 ms after transmission of the ACK for the MAC CE updating the TCI state, and switch the default PL-RS to the target TCI state later.

According to the timeline 2, the switching time of the default spatial relation (UL Tx beam) can be shortened.

### <Second Embodiment>

When the application condition is satisfied and the TCI state of the specific DL signal is updated by the MAC CE, at least one of the default spatial relation and the default PL-RS may be switched to the TCI state according to the specific timeline.

When the TCI state (target TCI state) indicated by the MAC CE (activation command) is known, the UE may switch the TCI state for receiving the specific DL signal to the target TCI state 3 ms after (DL switching timing) the ACK transmission for the PDSCH carrying the MAC CE. In the specific timeline, the UE may switch at least one of the default spatial relation and the default PL-RS of the specific UL signal to the target TCI state after 3 ms + offset (UL switching timing) from the ACK transmission. In the present disclosure, the offset and the time offset may be replaced with each other.

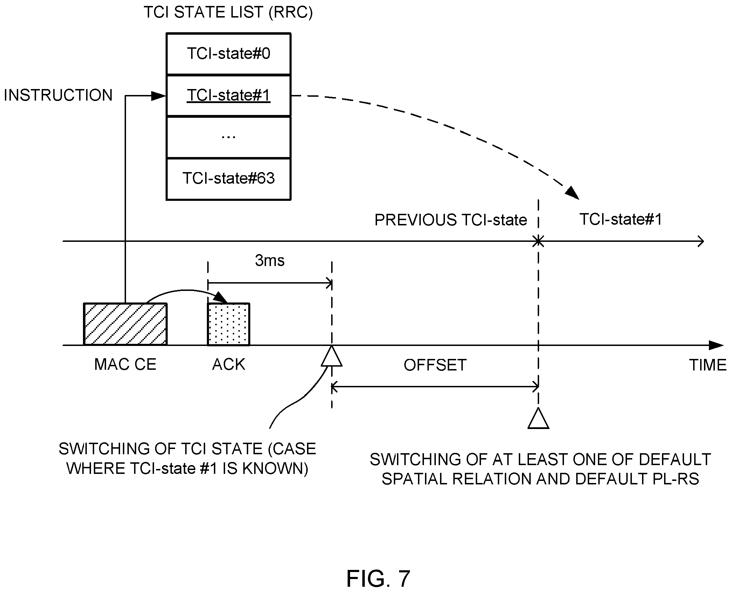

For example, as illustrated in Fig. 7, when the MAC CE activates the TCI state #1 and the TCI state #1 is known, the UE switches the TCI state for the specific DL signal to the TCI state #1 at timing 3 ms after the ACK transmission for the MAC CE, and switches at least one of the default spatial relation and the default PL-RS of the specific UL signal to the TCI state #1 after the offset time from the timing.

According to the second embodiment, even when the TCI state is updated by the MAC CE, the UE appropriately switches at least one of the default spatial relation and the default PL-RS.

### <Third Embodiment>

The offset in the second embodiment may be set by an RRC parameter, may be defined in a specification, or may be a value reported by UE capability information. The offset may be any one of the following offsets 1 to 5.

### [Offset 1]

0 (zero). The switching timing of at least one of the default spatial relation and the default PL-RS may be 3 ms after the ACK transmission to the MAC CE (may be TCI state switching timing when the target TCI state is known.). The UL switching timing may be the same as the DL switching timing.

### [Offset 2]

x [ms] or x [slot]. x may be defined by the specification or may be set by the RRC parameter. x may depend on the subcarrier spacing (SCS) or slot length.

### [Offset 3]

The offset for switching the spatial relation on the basis of the MAC CE. The offset may be defined in the specification or may be set by the RRC parameter. For example, when the target TCI state is known, the offset may be TOₖ * (T_{first-SSB} + T_{SSB-proc}). When the target TCI state is unknown, the offset may be T_{L1-RSRP} + TOᵤₖ * (T_{first-SSB} + T_{SSB-proc}).

### [Offset 4]

The time required for TCI state switching when the target TCI state is unknown. For example, the offset may be a time based on the time T_{L1-RSRP} for L1-RSRP measurement, or may be T_{L1-RSRP} + TOᵤₖ * (T_{first-SSB} + T_{SSB-proc}).

### [Offset 5]

The time required until the target TCI state becomes known from being unknown. For example, the offset may be a time based on the time T_{L1-RSRP} for L1-RSRP measurement, or may be T_{L1-RSRP}.

According to the third embodiment, the UE can switch at least one of the default spatial relation and the default PL-RS at appropriate timing.

### <Fourth Embodiment>

The offset of the third embodiment may depend on the type of parameter (reference parameter) referred to by at least one of the default spatial relation and the default PL-RS. In the present disclosure, the reference parameter, the TCI state or the QCL assumption, the reference parameter before update, the reference parameter after update, and the target TCI state may be replaced with each other.

The offset may depend on at least one of the following types 1 and 2 of the reference parameter.

### [Type 1]

The offset depends on whether the reference parameter is a TCI state for the PDCCH (CORESET) or a TCI state for the PDSCH. The offset when the reference parameter is the TCI state for the PDCCH and the offset when the reference parameter is the TCI state for the PDSCH may be different from each other.

The offset may depend on whether the CORESET is configured for the active DL BWP on the CC. The offset when the CORESET is configured for the active DL BWP on the CC and the offset when he CORESET is not configured for the active DL BWP on the CC may be different from each other. When the CORESET is configured for the active DL BWP on the CC, the reference parameter is a TCI state for the PDCCH. When the CORESET is not configured for the active DL BWP on the CC, the reference parameter is the TCI state for the PDSCH.

### [Type 2]

When the reference parameter is the TCI state for the PDCCH (CORESET) (when the CORESET is configured for the active DL BWP on the CC), the offset depends on whether the reference parameter is the TCI state or the QCL assumption. The offset when the reference parameter is the TCI state for the PDCCH and the offset when the reference parameter is the TCI state for the PDSCH may be different from each other. When the TCI state is configured for the CORESET, the UE uses the TCI state for reception of the PDCCH. When the TCI state is not configured for the CORESET, the UE assumes that the SSB corresponding to a random access channel (RACH) transmission occasion (the SSB identified by the UE during an initial access procedure) has a QCL relation with the DM-RS antenna port associated with the PDCCH reception and uses the QCL assumption for PDCCH reception.

According to the fourth embodiment, the UE can use an appropriate offset according to the RS referred to by at least one of the default spatial relation and the default PL-RS.

### <Fifth Embodiment>

The offset in the third embodiment may have any one of the following relations 1 and 2 with respect to whether the target TCI state is known or unknown.

### [Relation 1]

The offset depends on whether the target TCI state is known or unknown. Different offsets may be used between when the target TCI state is known and when the target TCI state is unknown.

When the target TCI state is known, a short offset (for example, 0) of the two different offsets may be used. When the target TCI state is unknown, a long offset (for example, greater than 0) of the two different offsets may be used. The long offset may be the offset 4 in the third embodiment, or may be the offset 5 in the third embodiment.

### [Relation 2]

The offset does not depend on whether the target TCI state is known or unknown. The same offset may be used between when the target TCI state is known and when the target TCI state is unknown. The UE may determine reception beams/Tx beams on the basis of the unknown TCI state (may determine/measure RSs of QCL type D).

According to the fifth embodiment, the UE can use an appropriate offset even if the RS referred to by at least one of the default spatial relation and the default PL-RS is known or unknown.

### <Sixth Embodiment>

The UE may perform any one of the following operations 1 and 2 in a period corresponding to the offset in the second embodiment. The period corresponding to the offset may start 3 ms after the ACK transmission to the MAC CE, and have a length of the offset.

### [Operation 1]

The UE transmits the specific UL signal by applying/assuming the spatial relation before the update.

### [Operation 2]

The UE transmits the specific UL signal by applying/assuming the spatial relation after the update. In a period corresponding to the offset, a performance requirement may be relaxed. For example, the performance requirement may be defined by at least one of a required SNR and a required error rate.

According to the sixth embodiment, the UE can operate properly in switching the TCI state.

### <Seventh Embodiment>

When the MAC CE for the TCI state referred to by at least one of the default spatial relation and the default PL-RS activates the target TCI state and the target TCI state is known, the UE may count the L1-RSRP measurement samples 3ms after the ACK transmission for the MAC CE and switch at least one of the default spatial relation and the default PL-RS to the target TCI state in a next slot of the N-th sample.

In the present disclosure, N may be defined in a specification, may be set by an RRC parameter, or may be a value reported by UE capability information. For example, N may be 5.

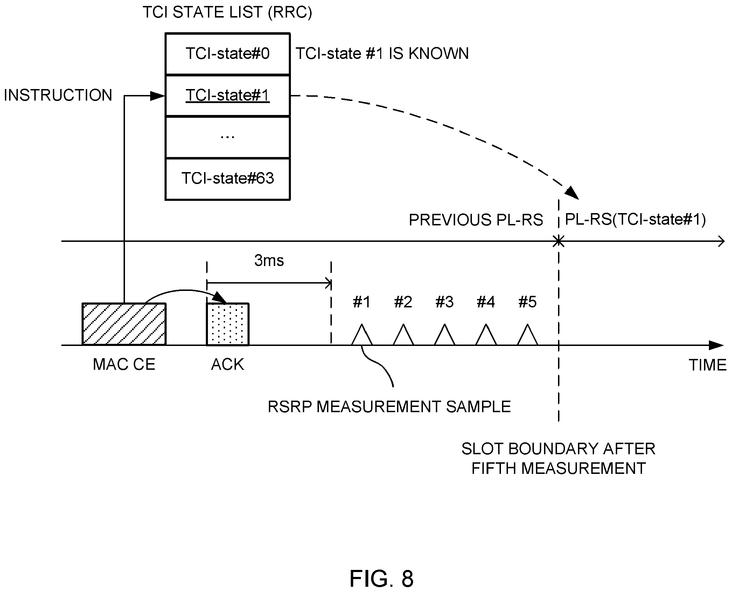

For example, as illustrated in Fig. 8, when the MAC CE for the TCI state referred to by the default PL-RS activates the TCI state #1 and the TCI state #1 is known, the UE may use the TCI state #1 for the PL-RS in a next slot for the fifth L1-RSRP measurement after 3ms of the ACK transmission for that MAC CE.

When the MAC CE for the TCI state referred to by at least one of the default spatial relation and the default PL-RS activates the target TCI state and the target TCI state is unknown, the UE may count the L1-RSRP measurement samples from the timing when the target TCI state becomes known (satisfying the known condition for TCI), and switch at least one of the default spatial relation and the default PL-RS to the target TCI state in the next slot of the N-th sample.

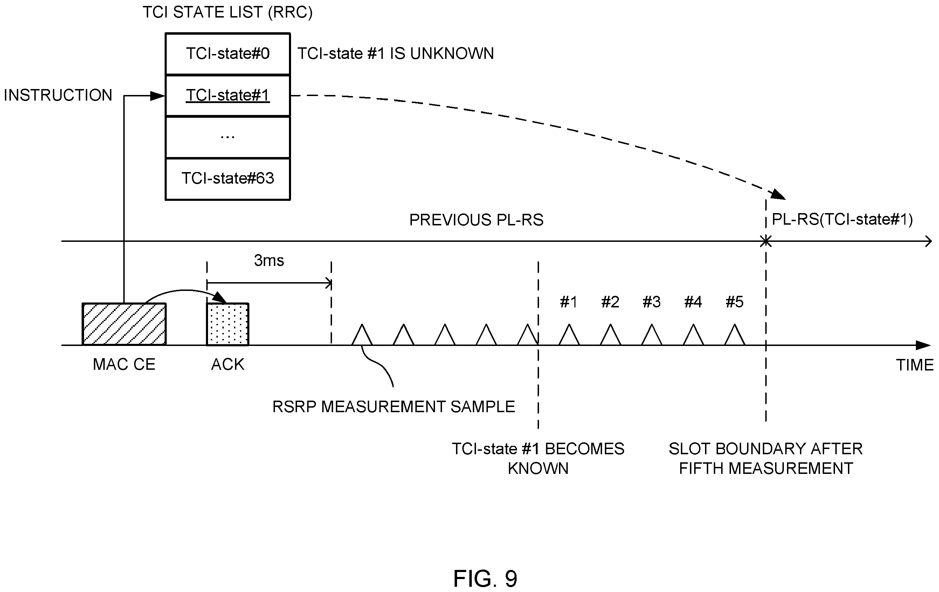

For example, as illustrated in Fig. 9, when the MAC CE for the TCI state referred to by the default PL-RS activates the TCI state #1 and the TCI state #1 is unknown, the UE may use the TCI state #1 for the PL-RS in the next slot of the fifth L1-RSRP measurement from the timing when the TCI state #1 becomes known.

According to the seventh embodiment, the UE can switch the default PL-RS at appropriate timing.

### <Eighth Embodiment>

As illustrated in Fig. 6, when the PL-RS list is set by the RRC parameter, and a PL-RS different from the PL-RS (previous PL-RS) used for Path-loss calculation is activated by the MAC CE, the UE may switch the PL-RS by using a timeline similar to that in the seventh embodiment.

When the PL-RS different from the previous PL-RS is activated by the MAC CE and the TCI state of the activated PL-RS is known, the UE may count the L1-RSRP measurement samples 3 ms after the ACK transmission for that MAC CE and switch the previous PL-RS to the activated PL-RS in the next slot of the N-th sample.

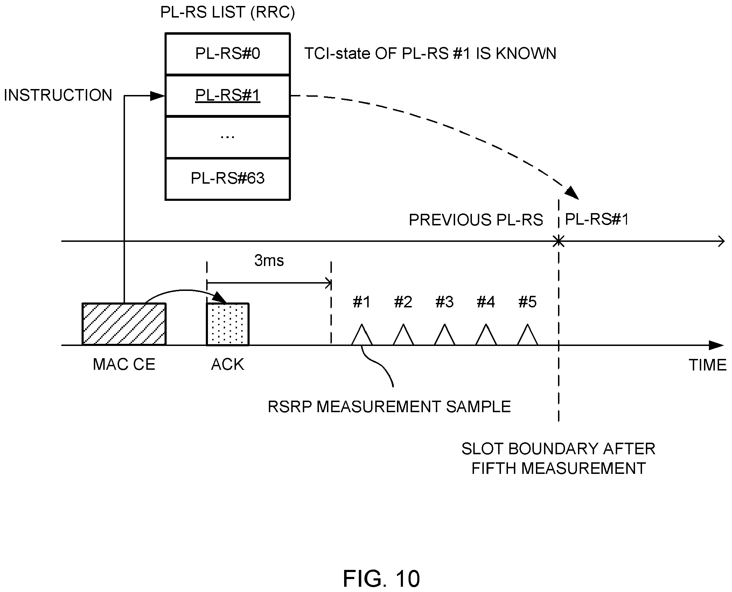

For example, as illustrated in Fig. 10, when the MAC CE activates the PL-RS #1 different from the previous PL-RS and the TCI state of the PL-RS #1 is known, the UE may switch the previous PL-RS to the PL-RS #1 in the next slot of the fifth L1-RSRP measurement 3 ms after the ACK transmission for the MAC CE.

When the PL-RS different from the previous PL-RS is activated by the MAC CE and the TCI state of the activated PL-RS is unknown, the UE may count the L1-RSRP measurement samples from the timing when the TCI state of the activated PL-RS becomes known (satisfying the known condition for TCI), and switch the previous PL-RS to the activated PL-RS in the next slot of the N-th sample.

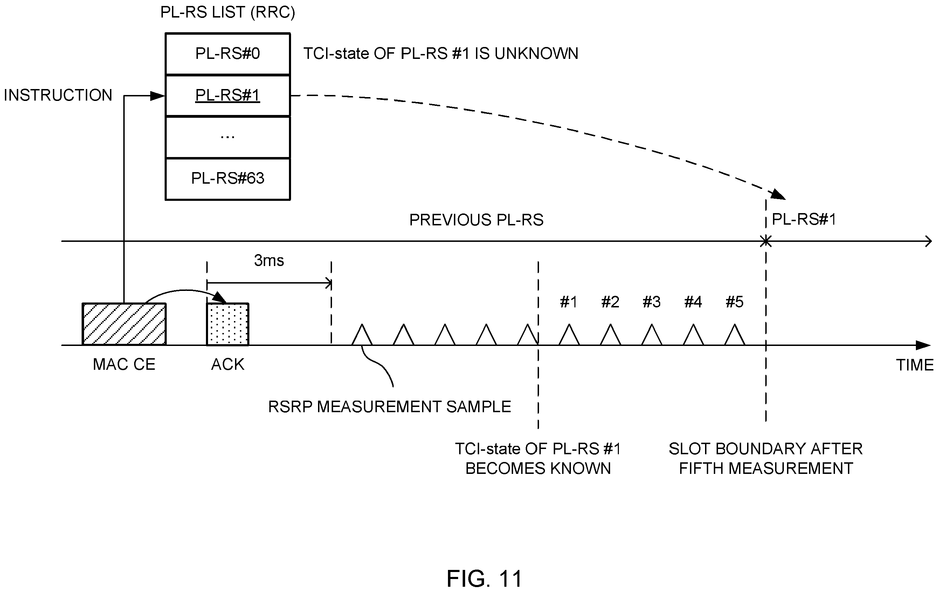

For example, as illustrated in Fig. 11, when the MAC CE activates the PL-RS #1 different from the previous PL-RS and the TCI state of the PL-RS #1 is unknown, the UE may switch the previous PL-RS to the PL-RS #1 in the next slot of the fifth L1-RSRP measurement from the timing when the TCI state of the PL-RS #1 becomes known.

According to the eighth embodiment, the UE can switch the PL-RS at appropriate timing.

### (Radio Communication System)

Hereinafter, a configuration of a radio communication system according to one embodiment of the present disclosure will be described. In this radio communication system, communication is performed using any one of the radio communication methods according to the embodiments of the present disclosure or a combination thereof.

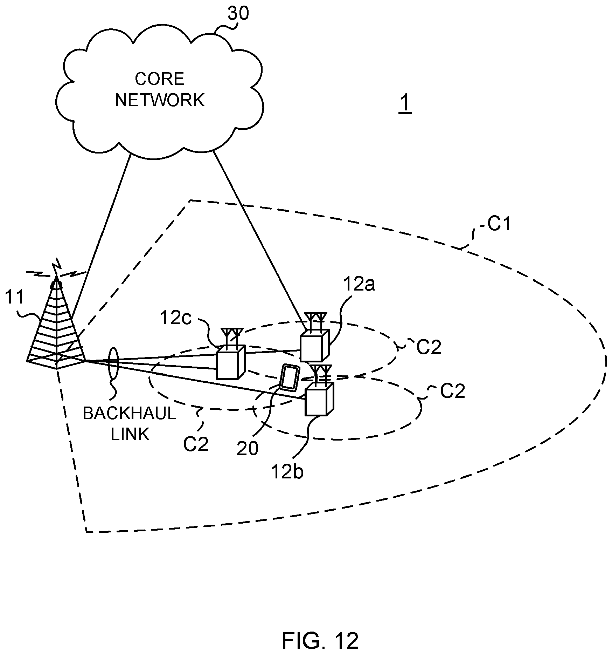

Fig. 12 is a diagram illustrating an example of a schematic configuration of a radio communication system according to one embodiment. A radio communication system 1 may be a system that implements communication using long term evolution (LTE), 5th generation mobile communication system New Radio (5G NR), and the like drafted as the specification by third generation partnership project (3GPP).

Further, the radio communication system 1 may support dual connectivity (multi-RAT dual connectivity (MR-DC)) between a plurality of radio access technologies (RATs). The MR-DC may include dual connectivity between LTE (evolved universal terrestrial radio access (E-UTRA)) and NR (E-UTRA-NR dual connectivity (EN-DC)), dual connectivity between NR and LTE (NR-E-UTRA dual connectivity (NE-DC)), and the like.

In the EN-DC, an LTE (E-UTRA) base station (eNB) is a master node (MN), and an NR base station (gNB) is a secondary node (SN). In the NE-DC, an NR base station (gNB) is MN, and an LTE (E-UTRA) base station (eNB) is SN.

The radio communication system 1 may support dual connectivity between a plurality of base stations in the same RAT (for example, dual connectivity in which both MN and SN are NR base stations (gNB) (NR-NR dual connectivity (NN-DC)).

The radio communication system 1 may include a base station 11 that forms a macro cell C1 with a relatively wide coverage, and base stations 12 (12a to 12c) that are disposed within the macro cell C1 and that form small cells C2 narrower than the macro cell C1. A user terminal 20 may be positioned in at least one cell. The arrangement, number, and the like of cells and the user terminals 20 are not limited to the aspects illustrated in the drawings. Hereinafter, the base stations 11 and 12 will be collectively referred to as "base stations 10" when the base stations 11 and 12 are not distinguished from each other.

The user terminal 20 may be connected to at least one of the plurality of base stations 10. The user terminal 20 may use at least one of carrier aggregation (CA) using a plurality of component carriers (CC) and dual connectivity (DC).

Each CC may be included in at least one of a first frequency band (frequency range 1 (FR1)) or a second frequency band (frequency range 2 (FR2)). The macro cell C1 may be included in the FR1, and the small cell C2 may be included in the FR2. For example, the FR1 may be a frequency band of 6 GHz or less (sub-6 GHz), and the FR2 may be a frequency band higher than 24 GHz (above-24 GHz). Note that the frequency bands, definitions, and the like of the FR1 and FR2 are not limited thereto, and, for example, the FR1 may correspond to a frequency band higher than the FR2.

Further, the user terminal 20 may perform communication on each CC using at least one of time division duplex (TDD) or frequency division duplex (FDD).

The plurality of base stations 10 may be connected to each other in a wired manner (for example, an optical fiber, an X2 interface, or the like in compliance with common public radio interface (CPRI)) or in a radio manner (for example, NR communication). For example, when NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

The base station 10 may be connected to a core network 30 via another base station 10 or directly. The core network 30 may include, for example, at least one of evolved packet core (EPC), 5G core network (5GCN), next generation core (NGC), or the like.

The user terminal 20 may a terminal that corresponds to at least one of communication methods such as LTE, LTE-A, and 5G.

In the radio communication system 1, a radio access method based on orthogonal frequency division multiplexing (OFDM) may be used. For example, in at least one of downlink (DL) or uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like may be used.

The radio access method may be referred to as a waveform. Note that in the radio communication system 1, another radio access method (for example, another single carrier transmission method or another multi-carrier transmission method) may be used as the UL and DL radio access method.

In the radio communication system 1, a downlink shared channel (physical downlink shared channel (PDSCH)) shared by the user terminals 20, a broadcast channel (physical broadcast channel (PBCH)), a downlink control channel (physical downlink control channel (PDCCH)), and the like may be used as downlink channels.

In the radio communication system 1, an uplink shared channel (physical uplink shared channel (PUSCH)) shared by the user terminals 20, an uplink control channel (physical uplink control channel (PUCCH)), a random access channel (physical random access channel (PRACH)), and the like may be used as uplink channels.

User data, higher layer control information, a system information block (SIB), and the like are transmitted on the PDSCH. User data, higher layer control information, and the like may be transmitted on the PUSCH. Furthermore, a master information block (MIB) may be transmitted on the PBCH.

Lower layer control information may be transmitted on the PDCCH. The lower layer control information may include, for example, downlink control information (DCI) including scheduling information of at least one of the PDSCH and the PUSCH.

Note that DCI that schedules PDSCH may be referred to as DL assignment, DL DCI, or the like, and DCI that schedules PUSCH may be referred to as UL grant, UL DCI, or the like. Note that PDSCH may be replaced with DL data, and PUSCH may be replaced with UL data.

For detection of the PDCCH, a control resource set (CORESET) and a search space may be used. The CORESET corresponds to a resource that searches for DCI. The search space corresponds to a search area and a search method for PDCCH candidates. One CORESET may be associated with one or more search spaces. UE may monitor CORESET associated with a certain search space based on search space configuration.

One search space may correspond to a PDCCH candidate corresponding to one or more aggregation levels. One or more search spaces may be referred to as a search space set. Note that "search space", "search space set", "search space configuration", "search space set configuration", "CORESET", "CORESET configuration", and the like in the present disclosure may be replaced with each other.

Uplink control information (UCI) including at least one of channel state information (CSI), delivery acknowledgement information (which may be referred to as, for example, hybrid automatic repeat request acknowledgement (HARQ-ACK), ACK/NACK, or the like), or scheduling request (SR) may be transmitted on the PUCCH. A random access preamble for establishing connection with a cell may be transmitted on the PRACH.

Note that in the present disclosure, downlink, uplink, and the like may be expressed without "link". Various channels may be expressed without adding "physical" at the beginning thereof.

In the radio communication system 1, a synchronization signal (SS), a downlink reference signal (DL-RS), and the like may be transmitted. In the radio communication system 1, a cell-specific reference signal (CRS), a channel state information reference signal (CSI-RS), a demodulation reference signal (DMRS), a positioning reference signal (PRS), a phase tracking reference signal (PTRS), or the like may be transmitted as the DL-RS.

The synchronization signal may be, for example, at least one of a primary synchronization signal (PSS) or a secondary synchronization signal (SSS). A signal block including the SS (PSS or SSS) and the PBCH (and the DMRS for the PBCH) may be referred to as an SS/PBCH block, an SS block (SSB), or the like. Note that, the SS, the SSB, or the like may also be referred to as a reference signal.

Furthermore, in the radio communication system 1, a measurement reference signal (sounding reference signal (SRS)), a demodulation reference signal (DMRS), or the like may be transmitted as an uplink reference signal (UL-RS). Note that, DMRSs may be referred to as "user terminal-specific reference signals (UE-specific Reference Signals)."

### (Base Station)

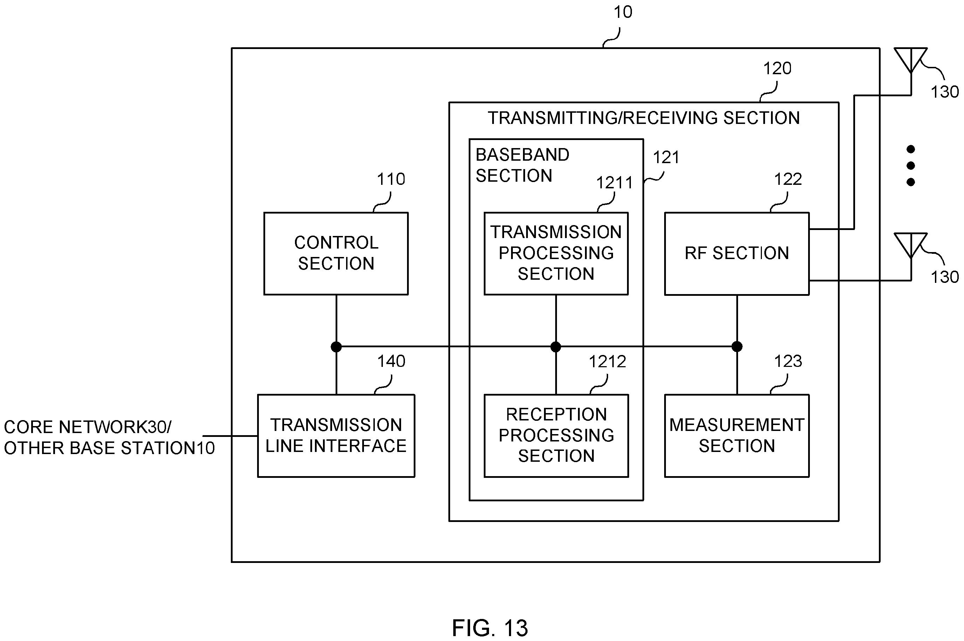

Fig. 13 is a diagram illustrating an example of a configuration of a base station according to one embodiment. The base station 10 includes a control section 110, a transmitting/receiving section 120, a transmission/reception antenna 130, and a transmission line interface 140. Note that one or more of the control sections 110, one or more of the transmitting/receiving sections 120, one or more of the transmission/reception antennas 130, and one or more of the transmission line interfaces 140 may be included.

Note that this example mainly describes a functional block which is a characteristic part of the present embodiment, and it may be assumed that the base station 10 also has another functional block necessary for radio communication. A part of processing of each section described below may be omitted.

The control section 110 controls the entire base station 10. The control section 110 can be constituted by a controller, a control circuit, or the like, which is described based on common recognition in the technical field to which the present disclosure relates.

The control section 110 may control signal generation, scheduling (for example, resource allocation or mapping), and the like. The control section 110 may control transmission/reception, measurement, and the like using the transmitting/receiving section 120, the transmission/reception antenna 130, and the transmission line interface 140. The control section 110 may generate data to be transmitted as a signal, control information, a sequence, and the like, and may forward the data, the control information, the sequence, and the like to the transmitting/receiving section 120. The control section 110 may perform call processing (such as configuration or releasing) of a communication channel, management of the state of the base station 10, and management of a radio resource.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can be constituted by a transmitter/receiver, an RF circuit, a baseband circuit, a filter, a phase shifter, a measurement circuit, a transmission/reception circuit, and the like, which are described based on common recognition in the technical field to which the present disclosure relates.

The transmitting/receiving section 120 may be constituted as an integrated transmitting/receiving section, or may be constituted by a transmitting section and a receiving section. The transmitting section may include the transmission processing section 1211 and the RF section 122. The receiving section may be constituted by the reception processing section 1212, the RF section 122, and the measurement section 123.

The transmission/reception antenna 130 can be constituted by an antenna described based on common recognition in the technical field to which the present disclosure relates, for example, an array antenna.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a Tx beam or a reception beam using digital beam forming (for example, precoding), analog beam forming (for example, phase rotation), and the like.

The transmitting/receiving section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like on, for example, data, control information, and the like acquired from the control section 110, to generate a bit string to be transmitted.

The transmitting/receiving section 120 (transmission processing section 1211) may perform transmission processing such as channel encoding (which may include error correction encoding), modulation, mapping, filtering processing, discrete Fourier transform (DFT) processing (if necessary), inverse fast Fourier transform (IFFT) processing, precoding, or digital-analog conversion on the bit string to be transmitted, to output a baseband signal.

The transmitting/receiving section 120 (RF section 122) may perform modulation to a radio frequency band, filtering processing, amplification, and the like on the baseband signal, and may transmit a signal in the radio frequency band via the transmission/reception antenna 130.

Meanwhile, the transmitting/receiving section 120 (RF section 122) may perform amplification, filtering processing, demodulation to a baseband signal, and the like on the signal in the radio frequency band received by the transmission/reception antenna 130.

The transmitting/receiving section 120 (reception processing section 1212) may apply reception processing such as analog-digital conversion, fast Fourier transform (FFT) processing, inverse discrete Fourier transform (IDFT) processing (if necessary), filtering processing, demapping, demodulation, decoding (which may include error correction decoding), MAC layer processing, RLC layer processing, or PDCP layer processing on the acquired baseband signal, to acquire user data and the like.

The transmitting/receiving section 120 (measurement section 123) may perform measurement on the received signal. For example, the measurement section 123 may perform radio resource management (RRM) measurement, channel state information (CSI) measurement, and the like based on the received signal. The measurement section 123 may measure received power (for example, reference signal received power (RSRP)), received quality (for example, reference signal received quality (RSRQ), a signal to interference plus noise ratio (SINR), a signal to noise ratio (SNR)), signal strength (for example, received signal strength indicator (RSSI)), propagation path information (for example, CSI), and the like. The measurement result may be output to the control section 110.

The transmission line interface 140 may transmit/receive a signal (backhaul signaling) to and from an apparatus included in the core network 30, another base stations 10, and the like, and may acquire, transmit, and the like user data (user plane data), control plane data, and the like for the user terminal 20.

Note that, the transmitting section and the receiving section of the base station 10 in the present disclosure may include at least one of the transmitting/receiving section 120, the transmission/reception antenna 130, and the transmission line interface 140.

The transmitting/receiving section 120 may transmit a medium access control-control element (MAC CE) that indicates a transmission configuration indication (TCI) state. When the specific uplink signal satisfies the application condition, the transmitting/receiving section 120 may receive the specific uplink signal transmitted using the TCI state for a spatial relation after timing after acknowledgment (ACK) transmission to the MAC CE.

### (User Terminal)

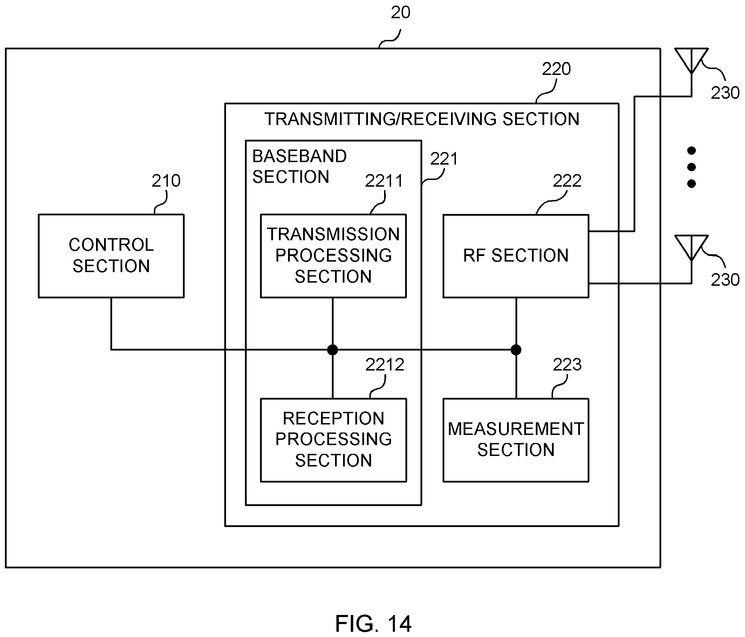

Fig. 14 is a diagram illustrating an example of a configuration of a user terminal according to one embodiment. The user terminal 20 includes a control section 210, a transmitting/receiving section 220, and a transmission/reception antenna 230. Note that one or more of the control sections 210, one or more of the transmitting/receiving sections 220, and one or more of the transmission/reception antennas 230 may be included.

Note that, although this example mainly describes functional blocks of a characteristic part of the present embodiment, it may be assumed that the user terminal 20 includes other functional blocks that are necessary for radio communication as well. A part of processing of each section described below may be omitted.

The control section 210 controls the entire user terminal 20. The control section 210 can include a controller, a control circuit, and the like that are described on the basis of common recognition in the technical field related to the present disclosure.

The control section 210 may control signal generation, mapping, and the like. The control section 210 may control transmission/reception, measurement, and the like using the transmitting/receiving section 220 and the transmission/reception antenna 230. The control section 210 may generate data to be transmitted as a signal, control information, a sequence, and the like, and may transfer the data, the control information, the sequence, and the like to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can include a transmitter/receiver, an RF circuit, a baseband circuit, a filter, a phase shifter, a measurement circuit, a transmission/reception circuit, and the like that are described on the basis of common recognition in the technical field related to the present disclosure.

The transmitting/receiving section 220 may be formed as an integrated transmitting/receiving section, or may include a transmitting section and a receiving section. The transmitting section may include the transmission processing section 2211 and the RF section 222. The receiving section may be configured by the reception processing section 2212, the RF section 222, and the measurement section 223.

The transmission/reception antenna 230 can include an antenna that is described on the basis of common recognition in the technical field related to the present disclosure, for example, an array antenna or the like.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a Tx beam and a reception beam by using digital beam forming (for example, precoding), analog beam forming (for example, phase rotation), and the like.

The transmitting/receiving section 220 (transmission processing section 2211) may perform PDCP layer processing, RLC layer processing (for example, RLC retransmission control), MAC layer processing (for example, HARQ retransmission control), and the like, for example, on data, control information, and the like acquired from the control section 210, to generate a bit string to be transmitted.

The transmitting/receiving section 220 (transmission processing section 2211) may perform transmission processing such as channel encoding (which may include error correction encoding), modulation, mapping, filtering processing, DFT processing (if necessary), IFFT processing, precoding, or digital-analog conversion on the bit string to be transmitted, to output a baseband signal.

Note that whether or not to apply DFT processing may be determined based on configuration of transform precoding. In a case where transform precoding is enabled for a certain channel (for example, PUSCH), the transmitting/receiving section 220 (transmission processing section 2211) may perform DFT processing as the transmission processing in order to transmit the channel using a DFT-s-OFDM waveform. In a case where it is not the case, DFT processing need not be performed as the transmission processing.

The transmitting/receiving section 220 (RF section 222) may perform modulation to a radio frequency range, filtering processing, amplification, and the like on the baseband signal, to transmit a signal in the radio frequency range via the transmission/reception antenna 230.

Meanwhile, the transmitting/receiving section 220 (RF section 222) may perform amplification, filtering processing, demodulation to a baseband signal, and the like on the signal in the radio frequency range received by the transmission/reception antenna 230.

The transmitting/receiving section 220 (reception processing section 2212) may apply reception processing such as analog-digital conversion, FFT processing, IDFT processing (if necessary), filtering processing, demapping, demodulation, decoding (which may include error correction decoding), MAC layer processing, RLC layer processing, or PDCP layer processing on the acquired baseband signal to acquire user data and the like.

The transmitting/receiving section 220 (measurement section 223) may perform measurement on the received signal. For example, the measurement section 223 may perform RRM measurement, CSI measurement, and the like based on the received signal. The measurement section 223 may measure received power (for example, RSRP), received quality (for example, RSRQ, SINR, or SNR), signal strength (for example, RSSI), propagation path information (for example, CSI), and the like. The measurement result may be output to the control section 210.

Note that the transmitting section and the receiving section of the user terminal 20 in the present disclosure may include at least one of the transmitting/receiving section 220 or the transmission/reception antenna 230.

The transmitting/receiving section 220 may receive a medium access control-control element (MAC CE) that indicates a transmission configuration indication (TCI) state. In a case where the specific uplink signal satisfies the application condition, the control section 210 may use the TCI state for the spatial relation (for example, at least one of a default spatial relation and a default PL-RS) of the specific uplink signal at timing (for example, UL switching timing) after acknowledgment (ACK) transmission to the MAC CE.

The timing may be after 3 ms + time offset from the ACK transmission.

The time offset when the TCI state is configured for a physical downlink control channel and the time offset when the TCI state is configured for a physical downlink shared channel may be different from each other.

The offset when the TCI state satisfies a condition for being considered known and the offset when the TCI state does not satisfy the condition may be different from each other.

### (Hardware Configuration)

Note that the block diagrams that have been used to describe the above embodiments illustrate blocks in functional units. These functional blocks (components) may be implemented in arbitrary combinations of at least one of hardware and software. Further, the method for implementing each functional block is not particularly limited. That is, each functional block may be implemented by a single apparatus physically or logically aggregated, or may be implemented by directly or indirectly connecting two or more physically or logically separate apparatuses (in a wired manner, a radio manner, or the like, for example) and using these apparatuses. The functional block may be achieved by combining the one device or the plurality of devices with software.

Here, the function includes, but is not limited to, determining, determining, judging, calculating, computing, processing, deriving, investigating, searching, ascertaining, receiving, transmitting, outputting, accessing, solving, selecting, choosing, establishing, comparing, assuming, expecting, regarding, broadcasting, notifying, communicating, forwarding, configuring, reconfiguring, allocating, mapping, assigning, and the like. For example, a functional block (component) that has a transmission function may be referred to as a transmitting section (transmitting unit), a transmitter, and the like. In any case, as described above, the implementation method is not particularly limited.

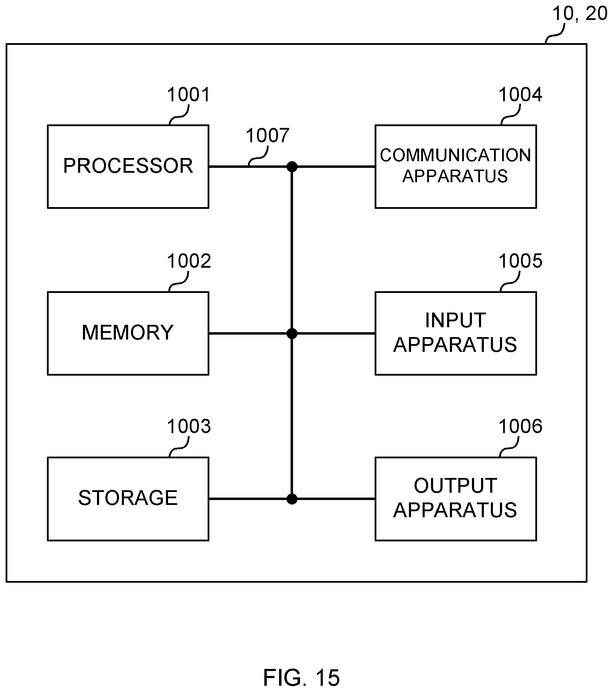

For example, the base station, the user terminal, or the like according to one embodiment of the present disclosure may function as a computer that executes the processing of the radio communication method in the present disclosure. Fig. 15 is a diagram illustrating an example of a hardware configuration of the base station and the user terminal according to one embodiment. Physically, the above-described base station 10 and user terminal 20 may be configured as a computer apparatus that includes a processor 1001, a memory 1002, a storage 1003, a communication apparatus 1004, an input apparatus 1005, an output apparatus 1006, a bus 1007, and the like.

Note that in the present disclosure, the terms such as an apparatus, a circuit, a device, a section, or a unit can be replaced with each other. The hardware configuration of the base station 10 and the user terminal 20 may be designed to include one or more of the apparatuses illustrated in the drawings, or may be designed not to include some apparatuses.

For example, although only one processor 1001 is illustrated, a plurality of processors may be provided. Further, the processing may be executed by one processor, or the processing may be executed by two or more processors simultaneously or sequentially, or using other methods. Note that the processor 1001 may be implemented with one or more chips.

Each of functions of the base station 10 and the user terminal 20 is, for example, implemented by causing predetermined software (program) to be read on hardware such as the processor 1001 or the memory 1002 to thereby cause the processor 1001 to perform operation, control communication via the communication apparatus 1004, and control at least one of reading and writing of data from or in the memory 1002 and the storage 1003.

The processor 1001 may control the whole computer by, for example, running an operating system. The processor 1001 may be configured by a central processing unit (CPU) including an interface with peripheral equipment, a control apparatus, an operation apparatus, a register, and the like. For example, at least a part of the above-described control section 110 (210), transmitting/receiving section 120 (220), and the like may be implemented by the processor 1001.

Furthermore, the processor 1001 reads programs (program code), software modules, data, and so on from at least one of the storage 1003 and the communication apparatus 1004 into the memory 1002, and executes various types of processing according to these. As the program, a program that causes a computer to execute at least a part of the operation described in the above-described embodiment is used. For example, the control section 110 (210) may be implemented by a control program that is stored in the memory 1002 and operates in the processor 1001, and another functional block may be implemented similarly.

The memory 1002 is a computer-readable recording medium, and may include, for example, at least one of a read only memory (ROM), an erasable programmable ROM (EPROM), an electrically EPROM (EEPROM), a random access memory (RAM), and other appropriate storage media. The memory 1002 may be referred to as a register, a cache, a main memory (primary storage apparatus), and the like. The memory 1002 may store a program (program code), a software module, and the like executable for implementing the radio communication method according to an embodiment of the present disclosure.

The storage 1003 is a computer-readable recording medium, and may include, for example, at least one of a flexible disk, a floppy (registered trademark) disk, a magneto-optical disk (for example, a compact disc ROM (CD-ROM) and the like), a digital versatile disk, a Blu-ray (registered trademark) disk), a removable disk, a hard disk drive, a smart card, a flash memory device (for example, a card, a stick, or a key drive), a magnetic stripe, a database, a server, or other appropriate storage media. The storage 1003 may be referred to as "secondary storage apparatus."

The communication apparatus 1004 is hardware (transmitting/receiving device) for performing inter-computer communication via at least one of a wired network and a wireless network, and for example, is referred to as network device, network controller, network card, communication module, and the like. The communication apparatus 1004 may include a high frequency switch, a duplexer, a filter, a frequency synthesizer, and the like in order to implement, for example, at least one of frequency division duplex (FDD) and time division duplex (TDD). For example, the transmitting/receiving section 120 (220), the transmission/reception antenna 130 (230), and the like described above may be implemented by the communication apparatus 1004. The transmitting/receiving section 120 (220) may be implemented by physically or logically separating the transmitting section 120a (220a) and the receiving section 120b (220b) from each other.

The input apparatus 1005 is an input device for receiving input from the outside (for example, a keyboard, a mouse, a microphone, a switch, a button, a sensor and so on). The output apparatus 1006 is an output device that performs output to the outside (for example, a display, a speaker, a light emitting diode (LED) lamp, or the like). Note that the input apparatus 1005 and the output apparatus 1006 may be provided in an integrated structure (for example, a touch panel).

Furthermore, these pieces of apparatus, including the processor 1001, the memory 1002 and so on are connected by the bus 1007 so as to communicate information. The bus 1007 may be formed with a single bus, or may be formed with buses that vary between pieces of apparatus.

Further, the base station 10 and the user terminal 20 may include hardware such as a microprocessor, a digital signal processor (DSP), an application specific integrated circuit (ASIC), a programmable logic device (PLD), or a field programmable gate array (FPGA), and some or all of the functional blocks may be implemented by the hardware. For example, the processor 1001 may be implemented with at least one of these pieces of hardware.

### (Variations)

Note that terms described in the present disclosure and terms necessary for understanding the present disclosure may be replaced with terms that have the same or similar meanings. For example, a channel, a symbol, and a signal (signal or signaling) may be replaced interchangeably. Further, the signal may be a message. The reference signal can be abbreviated as an RS, and may be referred to as a pilot, a pilot signal, and the like, depending on which standard applies. Further, a component carrier (CC) may be referred to as a cell, a frequency carrier, a carrier frequency, and the like.

A radio frame may be formed with one or more durations (frames) in the time domain. Each of the one or more periods (frames) included in the radio frame may be referred to as a subframe. Further, the subframe may include one or more slots in the time domain. A subframe may be a fixed time duration (for example, 1 ms) that is not dependent on numerology.

Here, the numerology may be a communication parameter used for at least one of transmission and reception of a certain signal or channel. For example, the numerology may indicate at least one of subcarrier spacing (SCS), a bandwidth, a symbol length, a cyclic prefix length, a transmission time interval (TTI), the number of symbols per TTI, a radio frame configuration, specific filtering processing performed by a transceiver in the frequency domain, specific windowing processing performed by a transceiver in the time domain, or the like.

The slot may include one or more symbols in the time domain (orthogonal frequency division multiplexing (OFDM) symbols, single carrier frequency division multiple access (SC-FDMA) symbols, and the like). Also, a slot may be a time unit based on numerology.

A slot may include a plurality of mini slots. Each mini slot may include one or more symbols in the time domain. Further, the mini slot may be referred to as a sub slot. Each mini slot may include fewer symbols than the slot. A PDSCH (or PUSCH) transmitted in a time unit larger than the mini slot may be referred to as PDSCH (PUSCH) mapping type A. A PDSCH (or PUSCH) transmitted using the mini slot may be referred to as PDSCH (PUSCH) mapping type B.

A radio frame, a subframe, a slot, a mini slot and a symbol all represent the time unit in signal communication. The radio frame, the subframe, the slot, the mini slot, and the symbol may be called by other applicable names, respectively. Note that time units such as a frame, a subframe, a slot, a mini slot, and a symbol in the present disclosure may be replaced with each other.

For example, one subframe may be referred to as TTI, a plurality of consecutive subframes may be referred to as TTI, or one slot or one mini slot may be referred to as TTI. That is, at least one of the subframe and the TTI may be a subframe (1 ms) in the existing LTE, may be a period shorter than 1 ms (for example, one to thirteen symbols), or may be a period longer than 1 ms. Note that the unit to represent the TTI may be referred to as a "slot," a "mini slot" and so on, instead of a "subframe."

Here, a TTI refers to the minimum time unit of scheduling in radio communication, for example. For example, in the LTE system, a base station performs scheduling to allocate radio resources (frequency bandwidth, transmission power, and the like that can be used in each user terminal) to each user terminal in TTI units. Note that the definition of TTIs is not limited to this.

The TTI may be the transmission time unit of channelencoded data packets (transport blocks), code blocks, codewords, and so on, or may be the unit of processing in scheduling, link adaptation, and so on. Note that when TTI is given, a time interval (for example, the number of symbols) in which the transport blocks, the code blocks, the codewords, and the like are actually mapped may be shorter than TTI.

Note that, when one slot or one mini slot is referred to as a "TTI," one or more TTIs (that is, one or multiple slots or one or more mini slots) may be the minimum time unit of scheduling. Also, the number of slots (the number of mini slots) to constitute this minimum time unit of scheduling may be controlled.

TTI having a period of 1 ms may be referred to as usual TTI (TTI in 3GPP Rel. 8 to 12), normal TTI, long TTI, a usual subframe, a normal subframe, a long subframe, a slot, or the like. A TTI that is shorter than the usual TTI may be referred to as "shortened TTI", "short TTI", "partial TTI" (or "fractional TTI"), "shortened subframe", "short subframe", "mini slot", "sub-slot", "slot", or the like.

Note that a long TTI (for example, a normal TTI, a subframe, etc.) may be replaced with a TTI having a time duration exceeding 1 ms, and a short TTI (for example, a shortened TTI) may be replaced with a TTI having a TTI duration less than the TTI duration of a long TTI and not less than 1 ms.

A resource block (RB) is the unit of resource allocation in the time domain and the frequency domain, and may include one or more contiguous subcarriers in the frequency domain. The number of subcarriers included in the RB may be the same regardless of the numerology, and may be twelve, for example. The number of subcarriers included in the RB may be determined based on numerology.

Also, an RB may include one or more symbols in the time domain, and may be one slot, one mini slot, one subframe or one TTI in length. One TTI, one subframe, and the like may be each formed with one or more resource blocks.

Note that one or more RBs may be referred to as a physical resource block (PRB), a subcarrier group (SCG), a resource element group (REG), a PRB pair, an RB pair, and the like.

Furthermore, a resource block may include one or more resource elements (REs). For example, one RE may be a radio resource field of one subcarrier and one symbol.

A bandwidth part (BWP) (which may be referred to as a partial bandwidth or the like) may represent a subset of contiguous common resource blocks (RBs) for a certain numerology in a certain carrier. Here, the common RB may be specified by the index of the RB based on a common reference point of the carrier. The PRB may be defined in a BWP and numbered within that BWP.

The BWP may include a BWP for UL (UL BWP) and a BWP for DL (DL BWP). For the UE, one or more BWPs may be configured within one carrier.

At least one of the configured BWPs may be active, and the UE does not need to be assumed to transmit or receive a predetermined signal/channel outside the active BWP. Note that, a "cell", a "carrier", and the like in the present disclosure may be replaced with a BWP.

Note that the structures of radio frames, subframes, slots, mini slots, symbols and so on described above are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, the symbol length, the length of cyclic prefix (CP), and the like can be variously changed.

Furthermore, the information and parameters described in the present disclosure may be represented in absolute values, represented in relative values with respect to given values, or represented using other corresponding information. For example, a radio resource may be specified by a predetermined index.

The names used for parameters and so on in the present disclosure are in no respect limiting. Further, any mathematical expression or the like that uses these parameters may differ from those explicitly disclosed in the present disclosure. Since various channels (PUCCH, PDCCH, and the like) and information elements can be identified by any suitable names, various names assigned to these various channels and information elements are not restrictive names in any respect.

The information, signals, and the like described in the present disclosure may be represented using any of various different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Further, information, signals, and the like can be output in at least one of a direction from higher layers to lower layers and a direction from lower layers to higher layers. Information, signals and so on may be input and output via a plurality of network nodes.

The information, signals and so on that are input and/or output may be stored in a specific location (for example, in a memory), or may be managed in a control table. The information, signals, and the like to be input and output can be overwritten, updated, or appended. The output information, signals, and the like may be deleted. The information, signals and so on that are input may be transmitted to other pieces of apparatus.

Notification of information may be performed not only using the aspects/embodiments described in the present disclosure but also using another method. For example, the notification of information in the present disclosure may be performed using physical layer signaling (for example, downlink control information (DCI) or uplink control information (UCI)), higher layer signaling (for example, radio resource control (RRC) signaling, broadcast information (master information block (MIB)), system information block (SIB), or the like), or medium access control (MAC) signaling), another signal, or a combination thereof.

Note that the physical layer signaling may be referred to as Layer 1/Layer 2 (L1/L2) control information (L1/L2 control signal), L1 control information (L1 control signal), and the like. Further, the RRC signaling may be referred to as an RRC message, and may be, for example, an RRC connection setup message, an RRC connection reconfiguration message, and the like. Further, notification of the MAC signaling may be performed using, for example, an MAC control element (CE).

Also, reporting of predetermined information (for example, reporting of information to the effect that "X holds") does not necessarily have to be sent explicitly, and can be sent implicitly (for example, by not reporting this piece of information, by reporting another piece of information, and so on) .

Decisions may be made in values represented by one bit (0 or 1), may be made in Boolean values that represent true or false, or may be made by comparing numerical values (for example, comparison against a predetermined value).

Software, whether referred to as "software," "firmware," "middleware," "microcode" or "hardware description language," or called by other names, should be interpreted broadly, to mean instructions, instruction sets, code, code segments, program codes, programs, subprograms, software modules, applications, software applications, software packages, routines, subroutines, objects, executable files, execution threads, procedures, functions and so on.

Also, software, commands, information and so on may be transmitted and received via communication media. For example, when software is transmitted from a website, a server, or another remote source by using at least one of a wired technology (coaxial cable, optical fiber cable, twisted pair, digital subscriber line (DSL), or the like) and a wireless technology (infrared rays, microwaves, and the like), at least one of the wired technology and the wireless technology is included within the definition of a transmission medium.

The terms "system" and "network" used in the present disclosure may be used interchangeably. The "network" may mean an apparatus (for example, a base station) included in the network.

In the present disclosure, terms such as "precoding", "precoder", "weight (precoding weight)", "quasi-co-location (QCL)", "transmission configuration indication state (TCI state)", "spatial relation", "spatial domain filter", "transmission power", "phase rotation", "antenna port", "antenna port group", "layer", "number of layers", "rank", "resource", "resource set", "resource group", "beam", "beam width", "beam angle", "antenna", "antenna element", and "panel" can be used interchangeably.

In the present disclosure, terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier", can be used interchangeably. The base station may be referred to as a term such as a macro cell, a small cell, a femto cell, or a pico cell.

The base station can accommodate one or more (for example, three) cells. In a case where the base station accommodates a plurality of cells, the entire coverage area of the base station can be partitioned into a plurality of smaller areas, and each smaller area can provide communication services through a base station subsystem (for example, small base station for indoors (remote radio head (RRH))). The term "cell" or "sector" refers to a part or the whole of a coverage area of at least one of a base station and a base station subsystem that performs a communication service in this coverage.

In the present disclosure, the terms such as "mobile station (MS)", "user terminal", "user equipment (UE)", and "terminal" can be used interchangeably.

A mobile station may be referred to as a subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client, or some other suitable terms.

At least one of the base station and the mobile station may be referred to as a transmitting apparatus, a receiving apparatus, a radio communication apparatus, and the like. Note that at least one of the base station and the mobile station may be a device mounted on a moving object, a moving object itself, and the like. The moving object may be a transportation (for example, a car, an airplane, or the like), an unmanned moving object (for example, a drone, an autonomous car, or the like), or a (manned or unmanned) robot. Note that at least one of the base station and the mobile station also includes an apparatus that does not necessarily move during a communication operation. For example, at least one of the base station and the mobile station may be an Internet of Things (IoT) device such as a sensor.

Further, the base station in the present disclosure may be replaced with the user terminal. For example, each aspect/embodiment of the present disclosure may be applied to a configuration in which communication between the base station and the user terminal is replaced with communication among a plurality of user terminals (which may be referred to as, for example, device-to-device (D2D), vehicle-to-everything (V2X), and the like). In this case, the user terminal 20 may have the function of the above-described base station 10. Further, terms such as "uplink" and "downlink" may be replaced with terms corresponding to communication between terminals (for example, "side"). For example, an uplink channel and a downlink channel may be replaced with a side channel.

Likewise, the user terminal in the present disclosure may be replaced with a base station. In this case, the base station 10 may be configured to have the functions of the user terminal 20 described above.

In the present disclosure, an operation performed by a base station may be performed by an upper node thereof in some cases. In a network including one or more network nodes with base stations, it is clear that various operations performed for communication with a terminal can be performed by a base station, one or more network nodes (examples of which include but are not limited to mobility management entity (MME) and serving-gateway (S-GW)) other than the base station, or a combination thereof.

Each aspect/embodiment described in the present disclosure may be used alone, used in a combination, and switched in association with execution. Further, the order of processing procedures, sequences, flowcharts, and the like of the aspects/embodiments described in the present disclosure may be re-ordered as long as there is no inconsistency. For example, regarding the methods described in the present disclosure, elements of various steps are presented using an illustrative order, but are not limited to the presented specific order.

Each aspect/embodiment described in the present disclosure may be applied to a system using long term evolution (LTE), LTE-advanced (LTE-A), LTE-beyond (LTE-B), SUPER 3G, IMT-Advanced, 4th generation mobile communication system (4G), 5th generation mobile communication system (5G), 6th generation mobile communication system (6G), xth generation mobile communication system (xG) (x is, for example, an integer or decimal), future radio access (FRA), new radio access technology (RAT), new radio (NR), new radio access (NX), future generation radio access (FX), global system for mobile communications (GSM (registered trademark)), CDMA 2000, ultra mobile broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or another appropriate radio communication method, a next generation system expanded on the basis of these, and the like. Further, a plurality of systems may be combined and applied (for example, a combination of LTE or LTE-A and 5G, and the like).

The term "on the basis of" used in the present disclosure does not mean "only on the basis of" unless otherwise specified. In other words, the phrase "based on" means both "based only on" and "based at least on."

Reference to elements with designations such as "first", "second", and so on as used in the present disclosure does not generally limit the number/quantity or order of these elements. These designations can be used in the present disclosure, as a convenient way of distinguishing between two or more elements. In this way, reference to the first and second elements does not imply that only two elements may be employed, or that the first element must precede the second element in some way.

The terms "judging (determining)" as used in the present disclosure may encompass a wide variety of operations. For example, "judging (determining)" may be interpreted to mean making judgements and determinations related to judging, calculating, computing, processing, deriving, investigating, looking up, search, inquiry (for example, looking up in a table, database, or another data structure), ascertaining, and so on.

Furthermore, to "judge" and "determine" as used herein may be interpreted to mean making judgements and determinations related to receiving (for example, receiving information), transmitting (for example, transmitting information), inputting, outputting, accessing (for example, accessing data in a memory) and so on.

In addition, to "judge" and "determine" as used herein may be interpreted to mean making judgements and determinations related to resolving, selecting, choosing, establishing, comparing and so on. In other words, to "judge" and "determine" as used herein may be interpreted to mean making judgements and determinations related to some action.

In addition, to "judge (determine)" may be replaced with "assuming", "expecting", "considering", and so on.

The "maximum transmission power" described in the present disclosure may mean a maximum value of transmission power, nominal UE maximum transmit power, or rated UE maximum transmit power.

As used in the present disclosure, the terms "connected" and "coupled", or any variation of these terms mean all direct or indirect connections or coupling between two or more elements, and may include the presence of one or more intermediate elements between two elements that are "connected" or "coupled" to each other. The coupling or connection between the elements may be physical, logical, or a combination of these. For example, "connection" may be replaced with "access".

As used in the present disclosure, when two elements are connected, these elements may be considered "connected" or "coupled" to each other by using one or more electrical wires, cables, printed electrical connections, and the like, and, as a number of non-limiting and non-inclusive examples, by using electromagnetic energy having wavelengths in the radio frequency, microwave, and optical (both visible and invisible) regions, or the like.

In the present disclosure, the phrase "A and B are different" may mean "A and B are different from each other." Note that the phrase may mean that "A and B are different from C". The terms such as "leave", "coupled", and the like may be interpreted as "different".

When the terms such as "include", "including", and variations of these are used in the present disclosure, these terms are intended to be inclusive, in a manner similar to the way the term "comprising" is used. Furthermore, the term "or" as used in the present disclosure is intended to be not an exclusive-OR.

In the present disclosure, for example, when translations add articles, such as a, an, and the in English, the present disclosure may include that the noun that follows these articles is in the plural.

Now, although the invention according to the present disclosure has been described in detail above, it is obvious to a person skilled in the art that the invention according to the present disclosure is by no means limited to the embodiments described in the present disclosure. The invention according to the present disclosure can be embodied with various corrections and in various modified aspects, without departing from the spirit and scope of the invention defined based on the description of claims. Consequently, the description of the present disclosure is provided only for the purpose of explaining examples, and should by no means be construed to limit the invention according to the present disclosure in any way.

## Claims

1. A terminal comprising:
a receiving section that receives a medium access control-control element (MAC CE) indicating a transmission configuration indication (TCI) state; and
a control section that uses the TCI state for a spatial relation of a specific uplink signal at timing after acknowledgment (ACK) transmission to the MAC CE when the specific uplink signal satisfies an application condition.

2. The terminal according to claim 1, wherein the timing is timing after 3 ms + time offset from the ACK transmission.

3. The terminal according to claim 2, wherein the time offset when the TCI state is configured for a physical downlink control channel and the time offset when the TCI state is configured for a physical downlink shared channel are different from each other.

4. The terminal according to claim 2, wherein the time offset when the TCI state satisfies a condition for being considered known and the time offset when the TCI state does not satisfy the condition are different from each other.

5. A radio communication method of a terminal, comprising:
receiving a medium access control-control element (MAC CE) indicating a transmission configuration indication (TCI) state; and
using the TCI state for a spatial relation of a specific uplink signal at timing after acknowledgment (ACK) transmission to the MAC CE when the specific uplink signal satisfies an application condition.

6. A base station comprising:
a transmitting section that transmits a medium access control-control element (MAC CE) indicating a transmission configuration indication (TCI) state; and
a receiving section that receives a specific uplink signal transmitted using the TCI state for a spatial relation after timing after acknowledgment (ACK) transmission to the MAC CE when the specific uplink signal satisfies an application condition.
